# EUROPÄISCHE PATENTSCHRIFT

(11) **EP 2 937 618 B1**
(45) Veröffentlichungstag und Bekanntmachung des Hinweises auf die Patenterteilung: **06.09.2017**
(21) Anmeldenummer: 14001480.4
(22) Anmeldetag: 24.04.2014
(51) Int. Cl.: F16M 11/08, F16M 11/20, F16M 13/02, F16C 11/10

(54) **Drehbare Verbindung mit Drehwinkelbegrenzung**
Rotatable connection with limitation of the rotational angle
Liaison rotative dotée d'une limitation d'angle de rotation

(43) Veröffentlichungstag der Anmeldung: 28.10.2015
(73) Patentinhaber: Ondal Medical Systems GmbH, 36088 Hünfeld (DE)
(72) Erfinder: Oginski, Stefan, 36041 Fulda (DE); Bauditz, Ronny, 98528 Suhl (DE); Göbel, Andreas, 36132 Eiterfeld (DE); Euler, Annika, 36088 Hünfeld (DE)
(74) Vertreter: Graf von Stosch, Andreas

(56) Entgegenhaltungen:
- EP-B1- 2 325 541

## Beschreibung

Die vorliegende Erfindung betrifft eine drehbare Verbindung für eine Stativvorrichtung zur Anordnung in einem Operationssaal, die einen anpassbaren Anschlagmechanismus aufweist, der zwischen einer Spindel und einer relativ zur Spindel verdrehbar um eine Drehachse gelagerten Buchse anordenbar ist und eingerichtet ist, mindestens zwei unterschiedliche relative Drehwinkel der Spindel relativ zur Buchse oder mindestens zwei unterschiedliche Drehbereiche festzulegen, wobei der anpassbare Anschlagmechanismus aufweist: eine Verdrehsicherung, welche in der Spindel anordenbar ist; und einen Kupplungsteil, welcher verdrehsicher an der Buchse vorgesehen ist und eine formschlüssige Kontur zum Festlegen einzelner Drehwinkelpositionen aufweist. Die vorliegende Erfindung betrifft insbesondere eine drehbare Verbindung mit einzelnen Merkmalen des Anspruchs 1 sowie ein Tragsystem bzw. eine Stativvorrichtung mit einzelnen Merkmalen des entsprechenden weiteren unabhängigen Anspruchs.

Stative, insbesondere Deckenstative wie z.B. Deckenversorgungseinheiten, Monitorträger, oder so genannte Federarme oder Zentralachsen, weisen meist einen oder mehrere in Bezug auf eine Vertikalposition starr angeordneten oder höhenverstellbaren Träger auf, mittels welchen eine daran befestigte medizintechnische Einrichtung bewegt und positioniert werden kann, z.B. in einem Operationssaal, insbesondere auch auf einer Intensivstation. An den Stativen sind häufig Versorgungseinheiten montiert, mit denen medizinisch-elektrische Endgeräte mit den z.B. während einer Operation benötigten Medien versorgt werden können. Die Träger definieren dabei einen Aktionsradius der medizintechnischen Einrichtung, in welchem die medizintechnische Einrichtung positioniert ist. Die Träger können meist zumindest um mindestens eine drehbare Verbindung, insbesondere ein Drehgelenk verdreht werden. Wahlweise sind die Träger auch höhenverstellbar und/oder um eine zumindest annähernd horizontal ausgerichtete Achse in der Höhe verschwenkbar angeordnet.

Eine Drehbewegung einzelner Träger, sei es eine absolute Drehbewegung oder eine Drehbewegung relativ zu einem anderen Träger, soll in vielen Fällen auf einen vorgegebenen Winkel begrenzt werden. Hierdurch kann z.B. vermieden werden, dass ein Träger um mehr als 360° gegenüber einem anderen Träger verdreht wird und dadurch im Träger geführte Leitungen verdrillt, eingequetscht oder sogar abgerissen werden. Eine Drehwinkelbegrenzung kann z.B. in Form eines Anschlags bereitgestellt werden, an welchem ein Träger bei einem bestimmten Verdrehwinkel, z.B. 300°, anschlägt. Der Anschlag kann dabei z.B. fest am Träger montiert sein, insbesondere in Form eines in radialer Richtung eingebrachten Sicherungsbolzens. Der Anschlag gibt dabei einen vordefinierten Drehwinkel vor. Eine solche Drehwinkelbegrenzung kann zwar sicherstellen, dass ein maximaler Drehwinkel nicht überschritten wird, hat aber meist auch den Nachteil, dass die Bewegungsfreiheit des Stativs eingeschränkt wird, also dass sich z.B. eine Versorgungseinheit des Stativs nicht mehr in beliebigen Positionen anordnen lässt. Der Aktionsradius des Stativs wird eingeschränkt, insbesondere ohne Berücksichtigung einer bestimmten Raumsituation. Deshalb muss in jedem Einzelfall erwogen werden, durch welchen Anschlag die Drehwinkelbegrenzung definiert werden kann oder soll. Die richtige Auslegung der Drehwinkelbegrenzung, insbesondere eine adäquate Positionierung des Anschlags, kann jedoch bereits bei der Herstellung eines jeweiligen Stativs Schwierigkeiten mit sich bringen, insbesondere dann, wenn noch nicht geklärt ist, an welchem Ort das Stativ jeweils eingesetzt werden soll. Daher sind Drehwinkelbegrenzungen praktisch, mittels welchen ein Drehwinkel oder eine Drehposition nachträglich angepasst werden kann.

Eine Vorrichtung mit einem einstellbaren Drehwinkel ist aus der EP 2 325 541 B1 bekannt. In der EP 2 325 541 B1 wird ein zweiteiliger anpassbarer Anschlagmechanismus beschrieben, bei welchem ein ringförmiges Teil selektiv außen um einen Umfang eines ersten Trägers bzw. eines Gelenks des ersten Trägers herum positioniert werden kann, und das ringförmige Teil weist eine Vielzahl von stirnseitig angeordneten Ausnehmungen oder Vorsprünge auf, mittels welchen es relativ zum ersten Träger auf einfache Weise in unterschiedlichen Drehwinkelpositionen anordenbar ist. Am ringförmigen Teil ist ferner ein Anschlag angeordnet, an welchem ein zweiter Träger anschlagen kann. Mittels des ringförmigen Teils kann ein Drehwinkel der beiden Träger relativ zueinander eingestellt werden. Der Anschlagmechanismus ist dabei innerhalb von einem Bund des zweiten Trägers angeordnet. Das ringförmige Teil kann durch Eingriff eines Werkzeugs in eine an einer Außenmantelfläche des ringförmigen Teils umlaufende Nut angehoben werden, um das ringförmige Teil relativ zum ersten Träger in einer gewünschten Drehwinkelposition zu positionieren. Ferner ist ein weiteres ringförmiges Teil am ersten Träger vorgesehen, welches relativ zum ringförmigen Teil positioniert werden kann. Die beiden ringförmigen Teile sind innerhalb vom Bund angeordnet und werden vom Bund radial außen umschlossen und abgedeckt. Im Bund ist ein in radialer Richtung eingebrachter Sicherungsbolzen angeordnet, welcher in einen zwischen den beiden ringförmigen Teilen gebildeten Zwischenraum eingereift. Durch die relative Drehposition des ersten ringförmigen Teils relativ zum zweiten ringförmigen Teil wird die Ausdehnung des Zwischenraums in Umfangsrichtung definiert. Über die Ausdehnung des Zwischenraums in Umfangsrichtung kann der Winkelbereich definiert werden, in welchem die beiden Träger relativ zueinander verdreht werden können. Der Anschlagmechanismus ist dabei im Wesentlichen am ersten Träger angeordnet und wirkt über den radial eingebrachten Sicherungsbolzen mit dem zweiten Träger zusammen.

In der DE 38 08 327 A1 wird ein Stoppmechanismus beschrieben, bei welchem ein Gewindebolzen in radialer Richtung in einer Gewindebohrung verlagert werden kann, um unterschiedliche Drehwinkelpositionen einzustellen.

Es ist eine Aufgabe der vorliegenden Erfindung, eine drehbare Verbindung bereitzustellen, mittels welcher ein Drehwinkel bzw. Dreh(winkel)bereich auf einfache Weise einstellbar ist. Insbesondere besteht die Aufgabe auch darin, eine Stativvorrichtung mit einer Drehwinkelbegrenzung bereitzustellen, bei welcher einzelne Träger der Stativvorrichtung dank einer besonders leicht oder auf flexible Weise einstellbaren drehbaren Verbindung in einem definierten Aktionsradius in einem Operationssaal positioniert werden können.

Diese Aufgabe wird gelöst durch eine drehbare Verbindung für eine Stativvorrichtung zur Anordnung in einem Operationssaal, umfassend einen anpassbaren Anschlagmechanismus, der zwischen einem ersten Verbindungsbauteil (insbesondere einem Verbindungsbauteil der drehbaren Verbindung) und einem relativ zum ersten Verbindungsbauteil verdrehbar um eine Drehachse gelagerten zweiten Verbindungsbauteil (insbesondere einem Verbindungsbauteil der drehbaren Verbindung) anordenbar ist und eingerichtet ist, mindestens zwei unterschiedliche relative Drehwinkel der Verbindungsbauteile relativ zueinander und/oder mindestens zwei unterschiedliche Drehbereiche festzulegen, wobei der anpassbare Anschlagmechanismus aufweist: eine Verdrehsicherung, welche verdrehsicher am ersten Verbindungsbauteil anordenbar ist; einen Kupplungsteil, welcher verdrehsicher am zweiten Verbindungsbauteil anordenbar ist, und welcher eine formschlüssige Kontur zum Festlegen einzelner Drehwinkelpositionen aufweist; wobei der anpassbare Anschlagmechanismus mindestens eine Anschlageinrichtung mit einem Integralanschlag aufweist, wobei die Anschlageinrichtung eine mit der formschlüssigen Kontur des Kupplungsteils korrespondierende formschlüssige Kontur aufweist, mittels welcher die Anschlageinrichtung verdrehsicher am Kupplungsteil in mindestens zwei unterschiedlichen Drehwinkelpositionen derart positionierbar ist, dass der Integralanschlag eingerichtet ist, mit der Verdrehsicherung direkt oder mittelbar über ein die Verdrehsicherung mit der Anschlageinrichtung (direkt) kuppelndes Element, insbesondere einen Anschlagring, zusammenzuwirken und die unterschiedlichen Drehwinkel oder Drehbereiche festzulegen. Hierdurch kann eine auf einfache, besonders flexible Weise einstellbare drehbare Verbindung bereitgestellt werden. Das Einstellen kann z.B. durch axiales Verlagern und Umsetzen bzw. Umstecken der Anschlageinrichtung erfolgen, insbesondere auf manuelle Weise. Die separate Anschlageinrichtung oder mehrere separate Anschlageinrichtungen, insbesondere zwei oder drei, können in unterschiedlichen Verdreh-Positionen zwischen den beiden Verbindungsbauteilen angeordnet werden. Dabei ist es auf besonders einfache Weise möglich, unterschiedliche Drehbereiche festzulegen, also z.B. einen Drehbereich von Kompass-Nord (der geografischen Nord-Richtung) um z.B. 300° oder 330° im Uhrzeigersinn und entgegen dem Uhrzeigersinn, oder einen Drehbereich ausgehend von Kompass-Ost um 330°. Dadurch kann der Aktionsradius z.B. einer Stativvorrichtung auch in Bezug auf eine Anordnung in Wandnähe oder in einer Ecke angepasst und eingestellt werden. Mit anderen Worten kann ein Startpunkt bzw. Ausgangspunkt eines bestimmten Drehwinkelbereichs auf einfache Weise eingestellt werden. Auch ein (absoluter/maximaler) Betrag des Drehwinkels kann durch Umpositionieren, insbesondere Umstecken der Anschlageinrichtung auf einfache Weise definiert oder angepasst werden, z.B. in 15°-Schritten. Der Integralanschlag ist bevorzugt integral an der Anschlageinrichtung vorgesehen, d.h., die Anschlageinrichtung bildet mit dem Integralanschlag ein einstückiges Teil.

Durch eine Anordnung des Anschlagmechanismus sowohl am ersten Verbindungsbauteil als auch am zweiten Verbindungsbauteil kann eine Anschlageinrichtung vorgesehen werden, die direkt zwischen den beiden Verbindungsbauteilen wirken kann und auf einfache Weise zwischen den beiden Verbindungsbauteilen angeordnet und umpositioniert werden kann, insbesondere durch axiale Verlagerung.

Mittels einer Anschlageinrichtung, die einen oder mehrere Integralanschläge aufweist, kann bei hoher Flexibilität und vielen Variationsmöglichkeiten die Anzahl der Komponenten gering gehalten werden. Bevorzugt ist der gesamte Anschlagmechanismus nur aus drei oder vier unterschiedlichen Komponenten aufgebaut, insbesondere der Verdrehsicherung, dem Kupplungsteil und der Anschlageinrichtung, und wahlweise auch einem zusätzlichen Anschlagring. Am jeweiligen Verbindungsbauteil kann dann jeweils eine Verbindung zum Kupplungsteil bzw. zur Verdrehsicherung vorgesehen sein.

Die als verdrehsichere Anordnung beschriebene Verbindung oder Lagerung des Kupplungsteils zum bzw. am zweiten Verbindungsbauteil kann dabei z.B. durch eine Nut-Feder-Verbindung bereitgestellt werden, also eine Verbindung, die nur eine einzige Relativposition der beiden Bauteile zueinander definiert. Eine verdrehsichere Anordnung kann dabei auch eine Anordnung umfassen, bei welcher der Kupplungsteil (einstückig) als ein integraler Teil des Verbindungsbauteils ausgebildet ist. Der Kupplungsteil ist in ein als Buchse ausgebildetes zweites Verbindungsbauteil integriert. Als drehbare Verbindung ist dabei bevorzugt eine Anordnung zu verstehen, mittels welcher eine Verdrehung zweier Bauteile zueinander um einen vorgebbaren Winkel sichergestellt werden kann. Die drehbare Verbindung ist eine Verbindung zwischen einer Buchse und einer Spindel. Die drehbare Verbindung weist bevorzugt mindestens ein Drehgelenk auf oder bildet einen Teil des Drehgelenks. Als Drehgelenk ist dabei bevorzugt ein Gelenk zu verstehen, welches zumindest eine Drehung um eine oder mehrere Drehachsen ermöglicht, wobei auch ein translatorischer Freiheitsgrad verwirklicht sein kann. Das Drehgelenk ist bevorzugt an der Schnittstelle zwischen zwei einzelnen Trägern angeordnet, kann jedoch auch einen einzelnen Träger in mehrere Abschnitte untergliedern. Das Drehgelenk kann z.B. an der Schnittstelle zwischen der Spindel und der Buchse vorgesehen sein.

Als Stativvorrichtung ist dabei bevorzugt eine Vorrichtung zum Halten, ortsfesten Anordnen und/oder Verlagern mindestens einer medizintechnische Einrichtung zu verstehen, die an einer Wand (in einem Wandlager) oder einer Decke oder auch am Boden eines Operationssaals oder irgendeines anderen Raumes für medizinische Zwecke fest montiert werden kann, also z.B. ein Deckenstativ. Die Stativvorrichtung ist dann nicht vollkommen frei im Operationssaal verlagerbar, sondern kann nur in einem bestimmten Aktionsradius verlagert werden, insbesondere relativ zu einem an einer Decke oder Wand des Operationssaals angeordneten Befestigungspunkt bzw. Montagepunkt. Die Stativvorrichtung kann als an einer Decke montierte Deckenversorgungseinheit ausgebildet sein und eine oder mehrere Versorgungskonsolen aufweisen, welche an einem oder mehreren Tragarmen gelagert und positionierbar ist. Die Stativvorrichtung kann auch als Monitorträger ausgebildet sein. Die Stativvorrichtung kann auch als so genannter, insbesondere an einer Wand montierter Federarm ausgebildet sein und z.B. eine Leuchte aufweisen. Die Stativvorrichtung kann auch als so genannte, insbesondere an einer Decke montierte Zentralachse ausgebildet sein und eine Mehrzahl von Tragsystemen mit jeweils mindestens einem Träger aufweisen, an welchem z.B. ein Monitor oder eine Leuchte gelagert ist. Die Stativvorrichtung muss jedoch nicht notwendigerweise fest an einer Wand montiert sein, sondern kann auch auf einem fahrbaren Unterbau montiert sein. Der fahrbare Unterbau kann z.B. mittels Bremsen ortsfest im Raum positioniert werden. Auch in diesem Fall ist ein anpassbarer Anschlagmechanismus zweckdienlich.

Als anpassbarer Anschlagmechanismus ist dabei bevorzugt jede Einrichtung zu verstehen, welche einen Drehwinkel und/oder Drehbereich eines Trägers in einem bestimmten einstellbaren Bereich begrenzen kann, insbesondere relativ zu einem weiteren Träger oder relativ zu einer fest im Raum positionierten (fiktiven) Drehachse, z.B. eine durch einen fest angeordneten Befestigungspunkt an einer Wand eines Raumes verlaufende Drehachse. Bevorzugt weist der anpassbare Anschlagmechanismus zumindest auch eine formschlüssig ausgebildete Verbindung auf oder ist für Formschluss ausgebildet. Der anpassbare Anschlagmechanismus kann zusätzlich auch kraftschlüssig wirken.

Als Drehbereich ist dabei bevorzugt ein Winkelbereich zu verstehen, in welchem ein Träger relativ zu einem weiteren Träger oder zu einer Wand verdreht werden kann. Der Winkelbereich kann z.B. 300° oder 330° betragen. Der Winkelbereich kann z.B. in Bezug auf unterschiedliche Umfangspositionen festgelegt werden, also z.B. von 0° bis 300° in Bezug auf eine Nord-Richtung, oder von 30° bis 330° in Bezug auf die Nord-Richtung. Der Drehbereich kann durch die unterschiedlichen Drehwinkelpositionen definiert werden. Der Winkelbereich muss aber nicht konstant groß sein, sondern kann auch auf z.B. 180° eingeschränkt werden.

Als Verdrehsicherung ist dabei bevorzugt ein Teil zu verstehen, welcher irgendwie verdrehblockierbar an die Drehbewegung des ersten Verbindungsbauteils (einer Spindel) gekoppelt ist und bevorzugt formschlüssig mit dem ersten Verbindungsbauteil zusammenwirkt. Die Verdrehsicherung steht dabei bevorzugt in radialer Richtung vom ersten Verbindungsbauteil hervor. Die Verdrehsicherung kann z.B. als Bolzen oder Stift oder integraler Vorsprung ausgebildet sein.

Als Kupplungsteil ist dabei bevorzugt ein Teil zu verstehen, welcher verdrehsicher an die Drehbewegung des zweiten Verbindungsbauteils (einer Buchse) gekoppelt ist und z.B. formschlüssig mit dem zweiten Verbindungsbauteil zusammenwirkt, insbesondere drehsynchron. Mit anderen Worten ist der Kupplungsteil derart am zweiten Verbindungsbauteil vorgesehen, dass der Kupplungsteil und das zweite Verbindungsbauteil jedenfalls dieselbe Drehbewegung ausführen. Die Position des Kupplungsteils relativ zum zweiten Verbindungsbauteil ist dann vordefiniert und auch nicht veränderbar. Der Kupplungsteil kann durch das zweite Verbindungsbauteil gebildet sein, z.B. angegossen sein. Bevorzugt ist der Kupplungsteil ortsfest am zweiten Verbindungsbauteil vorgesehen, also auch axialfest, d.h. in axialer Richtung relativ zum zweiten Verbindungsbauteil nicht verlagerbar. Der Kupplungsteil ist bevorzugt nur mit dem zweiten Verbindungsbauteil verbunden oder dadurch gebildet und ist vom ersten Verbindungsbauteil entkoppelt und wirkt nur mittels der Anschlageinrichtung indirekt mit dem ersten Verbindungsbauteil zusammen. Der Kupplungsteil kann z.B. ringförmig ausgebildet sein und kann mindestens eine formschlüssige Kontur in Form einer Verzahnung aufweisen, z.B. eine Sägezahnkontur, insbesondere an der Schnittstelle zur Anschlageinrichtung. Der Kupplungsteil kann dann als Zahnkranz bezeichnet werden. Bevorzugt sind am Kupplungsteil keine einen Drehbereich definierenden Anschläge bzw. Integralanschläge angeordnet. Derartige Anschläge sind nicht erforderlich, insbesondere weil eine relative Drehbewegung zwischen dem Kupplungsteil und der Anschlageinrichtung nicht stattfinden muss bzw. soll. Bevorzugt ist der Kupplungsteil eingerichtet, die Anschlageinrichtung drehfest in einer einstellbaren Drehposition am zweiten Verbindungsbauteil zu lagern, so dass die Verdrehsicherung an der Anschlageinrichtung anschlagen kann, um eine entsprechend hervorgerufene Reaktionskraft von der Anschlageinrichtung auf den Kupplungsteil zu übertragen.

Als Anschlageinrichtung ist dabei bevorzugt ein Teil zu verstehen, welcher dazu eingerichtet ist, einen Integralanschlag in einer relativ zu einem der Verbindungsbauteile, insbesondere relativ zum zweiten Verbindungsbauteil, ortsfesten Position bereitzustellen, wobei eine in Umfangsrichtung auf die Anschlageinrichtung ausgeübt (Verdreh-)Kraft, also ein Drehmoment, über den Integralanschlag zwischen den Verbindungsbauteilen übertragen werden kann. Bevorzugt erstreckt sich die Anschlageinrichtung abschnittsweise in einem möglichst kleinen Kreisbogen um die Drehachse herum. Die Anschlageinrichtung kann dann z.B. als Stellelement beschrieben werden. Bevorzugt ist die Anschlageinrichtung als ein Stellelement mit einer stirnseitig in axialer Richtung in Richtung des Kupplungsteils ausgebildeten formschlüssigen Kontur ausgebildet. Als Stellelement ist dabei bevorzugt ein Teil zu verstehen, welches in unterschiedlichen Drehwinkelpositionen positioniert werden kann, z.B. jeweils um 15° versetzt, also z.B. in 24 unterschiedlichen Drehwinkelpositionen, und dabei möglichst nur eine kleine Erstreckung in Umfangsrichtung aufweist. Als Integralanschlag ist dabei bevorzugt irgendein Flächenabschnitt oder Absatz zu verstehen, welcher in einem Grundkörper der Anschlageinrichtung integriert ist.

Als eine Drehwinkelposition ist dabei bevorzugt eine relative Verdrehposition eines Trägers gegenüber einem anderen angrenzenden Träger oder gegenüber einer fest im Raum in einer definierten Richtung ausgerichteten Achse zu verstehen. Die Drehwinkelposition ist bevorzugt in Bezug auf Drehwinkel um die Drehachse beschrieben. Die Drehwinkelposition kann auch in Bezug auf einen absoluten (Horizontal-)Winkel beschrieben werden, z.B. um eine (fiktive) vertikal ausgerichtete Drehachse.

Als eine formschlüssige Kontur ist dabei bevorzugt eine Verzahnung bzw. Zahnkontur oder eine Kontur mit regelmäßigen Absätzen oder Vorsprüngen zu verstehen. Dabei ist die Form eines einzelnen Zahns weitgehend beliebig. Bevorzugt weist der einzelne Zahn die Form eines Quaders bzw. im Querschnitt gesehen die Form eines Rechtecks auf. Die formschlüssige Kontur ist nicht notwendigerweise ausschließlich formschlüssig, sondern kann auch kraftschlüssig sein. Die formschlüssige Kontur ist bevorzugt nicht stoffschlüssig, um sicherzustellen, dass der mindestens eine Integralanschlag reversibel und beliebig häufig in unterschiedlichen Drehwinkelpositionen positionierbar ist.

Bevorzugt ist die Anschlageinrichtung eingerichtet, eine in Umfangsrichtung wirkende Drehkraft, die auf den Integralanschlag ausgeübt wird, direkt zwischen dem ersten Verbindungsbauteil und dem Kupplungsteil zu übertragen. Mit anderen Worten: die Anschlageinrichtung ist eingerichtet, diese beiden Teile direkt aneinander zu kuppeln.

Bevorzugt ist die Anschlageinrichtung in axialer Richtung entlang der Drehachse verlagerbar angeordnet. Hierdurch kann das Einstellen der drehbaren Verbindung auf einfache Weise erfolgen. Dabei braucht z.B. nur die Anschlageinrichtung ergriffen zu werden und axial herausgezogen werden, insbesondere nach oben entgegen einer Gravitationskraft.

Bevorzugt erstreckt sich die Anschlageinrichtung und/oder der Kupplungsteil zumindest abschnittsweise um die Drehachse herum, wobei der Kupplungsteil bevorzugt ringförmig ausgebildet ist und umlaufend um die Drehachse vorgesehen ist. Die Anschlageinrichtung hingegen ist bevorzugt nur über einen kleinen Winkelbereich als ein Segment eines Kreisrings ausgebildet.

Bevorzugt sind die formschlüssige Kontur des Kupplungsteils und die formschlüssige Kontur der Anschlageinrichtung jeweils als Zahnkranz ausgebildet, wobei Zähne des Zahnkranzes bevorzugt in einer axialen Richtung zumindest annähernd parallel zur Drehachse hervorstehen. Als Zahnkranz ist dabei bevorzugt eine in Bezug auf die Drehachse rotationssymmetrisch ausgebildete Kontur mit einer Vielzahl einzelner Zähne zu verstehen, bei welcher die Zähne in einheitlichem Abstand zueinander angeordnet sind. Die Ausgestaltung als Zahnkranz liefert z.B. den Vorteil kleiner Verstellschritte, denn umso mehr Zähne vorgesehen sind, desto feiner kann der Startpunkt bzw. Ausgangspunkt des Drehwinkelbereichs definiert werden, z.B. in 10°-Schritten.

Gemäß einem Ausführungsbeispiel ist die Anschlageinrichtung als steckbares Stellelement, insbesondere Stellblock, ausgebildet, bevorzugt als in axialer Richtung entlang der Drehachse axial verlagerbares Stellelement. Hierdurch kann eine leichte Bedienbarkeit und gute Zugänglichkeit sichergestellt werden, insbesondere um den gesamten Umfang herum, selbst für den Fall dass der Kupplungsteil in das zweite Verbindungsbauteil integriert ist.

Bevorzugt ist die formschlüssige Kontur des Kupplungsteils in einer axialen Richtung zumindest annähernd parallel zur Drehachse derart zugänglich, dass die Anschlageinrichtung mit der korrespondierenden formschlüssigen Kontur in der axialen Richtung auf den Kupplungsteil aufsteckbar ist. Dies erleichtert sowohl die Montage als auch das Einstellen.

Bevorzugt ist die Anschlageinrichtung in axialer Richtung allein aufgrund der Gewichtskraft axial am Kupplungsteil bzw. am zweiten Verbindungsbauteil positioniert. Diese freie Anordnung (ohne zusätzliche Befestigungsmittel) kann einen auf besonders einfache Weise einstellbaren bzw. anpassbaren Anschlagmechanismus bereitstellen. Bevorzugt ist die Anschlageinrichtung derart angeordnet, dass eine verdrehsichere Anordnung der Anschlageinrichtung am Kupplungsteil (insbesondere ausschließlich) durch eine auf die Anschlageinrichtung wirkende Gewichtskraft bzw. Gravitationskraft sichergestellt ist. Hierbei muss zum Anpassen des Anschlagmechanismus lediglich eine Verlagerung der Anschlageinrichtung entgegen einer auf die Anschlageinrichtung wirkenden Gewichtskraft erfolgen. Es ist nicht erforderlich, irgendwelche radial eingebrachten Sicherungsstifte oder -schrauben zu entfernen. Vielmehr kann z.B. mittels eines Sicherungsrings eine axiale Sicherung der Anschlageinrichtung erfolgen, sofern erwünscht. Eine solche Sicherung ist jedoch nicht notwendigerweise erforderlich, so dass ein Einstellen des Drehbereichs oder Drehwinkels werkzeuglos erfolgen kann.

Gemäß einem Ausführungsbeispiel ist die Anschlageinrichtung im Wesentlichen oder ausschließlich durch einen einzelnen Grundkörper gebildet, wobei der Integralanschlag bevorzugt an einer Seitenfläche des Grundkörpers und/oder in einer Einbuchtung des Grundkörpers gebildet ist. Als ein am Grundkörper gebildeter Integralanschlag ist dabei ein Integralanschlag zu verstehen, der durch eine (Seiten-)Fläche bzw. Flanke (Radialfläche) oder einen Innenabsatz des Grundkörpers bereitgestellt wird, welche(r) nicht vom Grundkörper hervorsteht. Dies kann eine kompakte und stabile Anordnung sicherstellen. Ein auf die Anschlageinrichtung ausgeübter Impuls kann gut abgedämpft und weitergeleitet werden. Ein Drehmoment durch irgendwelche hervorstehenden Absätze oder Vorsprünge wird nicht ausgeübt. Hierdurch kann vermieden werden, dass die Anschlageinrichtung aus dem Sitz bzw. aus der Position am Kupplungsteil herausgehebelt wird, selbst dann wenn die Anschlageinrichtung verhältnismäßig klein oder schmal ausgeführt ist.

Gemäß einem Ausführungsbeispiel ist der Integralanschlag durch einen Steg mit in Umfangsrichtung nach innen versetzten Seitenflächenabschnitten und/oder durch Seitenflächen des Grundkörpers gebildet. Hierdurch kann sichergestellt werden, dass die Anschlageinrichtung sicher in einer jeweiligen Steckposition am Kupplungsteil positioniert bleibt, selbst wenn verhältnismäßig große Impulse auf die Anschlageinrichtung einwirken.

Gemäß einem Ausführungsbeispiel weist der Grundkörper eine kreisbogenförmige Geometrie auf, insbesondere eine kreisbogenförmige innenliegende Fläche und/oder eine kreisbogenförmige außenliegende Fläche. Hierdurch kann ein Einstecken des Grundkörpers direkt zwischen dem Kupplungsteil und dem ersten Verbindungsbauteil erfolgen. Abgesehen von der formschlüssigen Kontur kann die Anschlageinrichtung demnach eine Geometrie aufweisen, welche mit der (insbesondere rohrförmigen) Geometrie des ersten Verbindungsbauteil und der Geometrie des Kupplungsteils korrespondiert. Hierdurch kann die Anschlageinrichtung auf sichere Weise zwischen dem ersten Verbindungsbauteil und dem Kupplungsteil positioniert werden, selbst wenn die Anschlageinrichtung nur schnell oder unachtsam manuell zwischen diese beiden Teile gesteckt wird. Diese Anordnung kann seine sichere Selbstpositionierung, Zentrierung und Ausrichtung zwischen dem ersten Verbindungsbauteil und dem Kupplungsteil sicherstellen.

Bevorzugt weist der Grundkörper eine innenliegende Fläche auf, welche geometrisch korrespondierend zu einer Mantelfläche des ersten Verbindungsbauteils ausgebildet ist. Ferner weist der Grundkörper bevorzugt auch mindestens einen außenliegenden, bevorzugt kreisbogenförmigen, Flächenabschnitt auf, welcher geometrisch korrespondierend zu mindestens einem Flächenabschnitt der formschlüssigen Kontur des Kupplungsteils ausgebildet ist. Durch eine Ausgestaltung derjenigen Flächen, welche die relative Anordnung der Anschlageinrichtung relativ zum ersten Verbindungsbauteil bzw. zum Kupplungsteil sicherstellen, im Bereich der formschlüssigen Kontur kann die Anschlageinrichtung zwischen dem ersten Verbindungsbauteils und dem Kupplungsteil positioniert werden und an diesen beiden Teilen so zur Anlage gebracht, dass ein Verkeilen oder Verkanten weitgehend verhindert werden kann, selbst wenn ein beträchtlicher Impuls beim Aufeinandertreffen von zwei Anschlägen (bei wuchtiger Drehbewegung) auf die Anschlageinrichtung einwirkt und in das zweite Verbindungsbauteil weitergeleitet werden muss. Gleichzeitig kann sichergestellt werden, dass die beiden formschlüssigen Konturen einander kontaktieren, selbst bei einer werkzeuglos eingesteckten Anschlageinrichtung.

Bevorzugt weist der Grundkörper eine kreisbogenförmige innenliegende Fläche auf, welche eine Zentrierung zur Definition einer Radialposition relativ zum ersten Verbindungsbauteil bildet. Eine über die innenliegende Fläche definierte Radialposition kann ein Eingreifen der formschlüssigen Konturen mit guter Sicherheit sicherstellen. Dabei beruht die Erfindung auch auf der Erkenntnis, dass die Anschlageinrichtung sicher zwischen dem ersten Verbindungsbauteil und dem zweiten Verbindungsbauteil positioniert werden kann, insbesondere da die beiden Verbindungsbauteile weitgehend spielfrei relativ zueinander verlagert werden können. Diese spielfreie Anordnung kann genutzt werden, um auf leichte Weise (insbesondere werkzeuglos) einstellbare Anschlageinrichtungen sicher zu positionieren. Bevorzugt ist die innenliegende Fläche über die gesamte Höhe (Erstreckung in einer Richtung entsprechend der Richtung der Drehachse) ausgebildet. Dies kann eine stabile Anordnung am Kupplungsteil bzw. am ersten Verbindungsbauteil sicherstellen. Ein Verkanten kann effektiv vermieden werden. Beim Einstecken kann die Anschlageinrichtung dabei am ersten Verbindungsbauteil in axialer Richtung entlang gleiten. Mit anderen Worten: das erste Verbindungsbauteil kann genutzt werden, um die beiden formschlüssigen Konturen problemlos miteinander in Eingriff zu bringen, selbst wenn ein Sichtkontakt aus irgendwelchen Gründen nicht möglich sein sollte. Auch ein Verlagern in Umfangsrichtung entlang des ersten Verbindungsbauteils kann mittels einer solchen kreisbogenförmigen innenliegenden Fläche erleichtert werden, insbesondere um am Kupplungsteil eine bestimmte Position für die Anschlageinrichtung zu ertasten oder zu finden.

Gemäß einem Ausführungsbeispiel ist der Grundkörper als Kreisringsegment ausgebildet, welches bevorzugt symmetrisch in Bezug auf eine mittig durch den Grundkörper verlaufende Radialebene (RE) ausgebildet ist. Hierdurch können eine Vielzahl unterschiedlicher Positionen für die Anschlageinrichtung am Kupplungsteil bereitgestellt werden, und der Integralanschlag kann an Flächen bereitgestellt werden, die in Hinblick auf die zu übertragenden Kräfte und Momente in vorteilhaften Punkten mit der Verdrehsicherung oder einem zusätzlichen Anschlagring zusammenwirken können. Bevorzugt ist der Grundkörper dabei durch eine innenliegende Fläche und eine außenliegende Fläche begrenzt, die konzentrisch zueinander sind und die konzentrisch zur Drehachse anordenbar sind.

Gemäß einem Ausführungsbeispiel weist die Anschlageinrichtung, insbesondere der Grundkörper, in Umfangsrichtung des Kupplungsteils um die Drehachse eine Erstreckung entsprechend einem Kreisbogen im Bereich von 5° bis 50°, bevorzugt 10° bis 40°, weiter bevorzugt 15° bis 30° aufweist. Eine Kreisbogenersteckung von mindestens 10° ist insbesondere aus Stabilitätsgründen und in Hinblick auf eine gute Sicherheit gegen Verkanten vorteilhaft. Eine Kreisbogenersteckung von maximal 30° oder 40° ist insbesondere in Hinblick auf einen großen Drehwinkelbereich vorteilhaft, insbesondere in Verbindung mit zwei Anschlageinrichtungen, welche beide am Kupplungsteil angeordnet sind und unterschiedliche Drehwinkelpositionen definieren. Eine möglichst kleine Kreisbogenersteckung ermöglicht auch eine Anordnung der beiden Anschlageinrichtungen nebeneinander, ohne dass der Drehwinkelbereich stark eingeschränkt wird.

Gemäß einem Ausführungsbeispiel ist die formschlüssige Kontur des Kupplungsteils an einer nach innen weisenden Mantelfläche und/oder an einer in die axiale Richtung weisenden Oberseite des Kupplungsteils ausgebildet, wobei die formschlüssige Kontur der Anschlageinrichtung an einer in axialer Richtung zum Kupplungsteil hin weisenden Unterseite ausgebildet ist. Dies kann eine gut zugängliche, einfach bedienbare Steckverbindung sicherstellen, bei welcher die einzelnen Steckpositionen auch einsehbar sind und z.B. abgezählt werden können, beispielsweise um den Drehwinkel um 45° zu verändern, entsprechend z.B. drei Steckpositionen weiter in Umfangsrichtung.

Bevorzugt ist die formschlüssige Kontur der Anschlageinrichtung an einer Unterseite des Grundkörpers ausgebildet, insbesondere radial außen zwischen der Unterseite und der außenliegenden Fläche. Diese Position der formschlüssigen Kontur am Grundkörper begünstigt z.B. ein sicheres Positionieren der Anschlageinrichtung zwischen den beiden Verbindungsbauteilen.

Gemäß einem Ausführungsbeispiel ist die formschlüssige Kontur der Anschlageinrichtung durch mindestens eine Ausnehmung gebildet, welche eine außenliegende Fläche mit einer Unterseite der Anschlageinrichtung (insbesondere des Grundkörpers) verbindet, und welche dadurch einen Rand bzw. eine zwischen der außenliegenden Fläche und der Unterseite gebildete radial außenliegende Kante unterbricht, wobei die Ausnehmung in einem Abstand zu gegenüberliegenden Seitenflächen der Anschlageinrichtung angeordnet ist. Eine beabstandete Anordnung der Ausnehmung kann sicherstellen, dass die Anschlageinrichtung sich gut in Umfangsrichtung abstützen kann bei einem auf die Anschlageinrichtung einwirkenden Impuls in Umfangsrichtung.

Gemäß einem Ausführungsbeispiel ist die formschlüssige Kontur der Anschlageinrichtung durch Zähne, insbesondere durch einen oder zwei Zähne, gebildet, wobei die Zähne bevorzugt an zwei gegenüberliegenden Seitenflächen angeordnet sind oder die Seitenflächen zumindest abschnittsweise definieren. Über die Zähne kann sich die Anschlageinrichtung gut in Umfangsrichtung abstützen. Bevorzugt weisen die Zähne jeweils vier freiliegende Flächenabschnitte auf, mittels welchen die Außenkontur der Zähne definiert ist. Die Zähne weisen dann keine fünf Flächen auf, wie dies bei einem hervorstehenden Zahn oder Würfel der Fall wäre. Mit anderen Worten sind die Zähne bevorzugt nicht hervorstehende Zähne, sondern in den Grundkörper integrierte Zähne, die durch die mindestens eine Ausnehmung gebildet sind. Gemäß einer Variante können auch hervorstehende Zähne mit fünf Flächen vorgesehen sein.

Die formschlüssige Kontur der Anschlageinrichtung weist bevorzugt gegenüberliegende Radialflächen (Flanken) auf, welche geometrisch korrespondierend zu gegenüberliegenden Radialflächen der formschlüssigen Kontur des Kupplungsteils ausgebildet sind. Dies kann eine wirkungsvolle Weiterleitung von Kräften und Impulsen in Umfangsrichtung sicherstellen, und gleichzeitig ist die Anschlageinrichtung auf einfache Weise umsteckbar oder umpositionierbar.

Gemäß einem Ausführungsbeispiel weist die Anschlageinrichtung eine Höhe (H) entsprechend einer Erstreckung in einer Richtung entsprechend der Richtung der Drehachse auf, die um den Faktor 1.5 bis Faktor 10, bevorzugt um Faktor 2 bis 7, weiter bevorzugt um Faktor 3 bis 5 größer ist als eine Höhe (H1) der formschlüssigen Kontur. Derartige Größenverhältnisse können die Stabilität der Anordnung erhöhen und die (manuelle) Handhabung der Anschlageinrichtung erleichtern, insbesondere ein Ergreifen, Umpositionieren und Einstecken. Die Anschlageinrichtung, insbesondere ein Grundkörper, steht deutlich von der formschlüssigen Kontur des Kupplungsteils hervor, und dennoch kann eine stabile Anordnung am Kupplungsteil sichergestellt werden.

Gemäß einem Ausführungsbeispiel ist die formschlüssige Kontur des Kupplungsteils an einem in axialer Richtung hervorstehenden Rand des Kupplungsteils gebildet. Mittels des Randes kann eine Radialposition der Anschlageinrichtung definiert werden. Die formschlüssige Kontur des Kupplungsteils weist bevorzugt Flächenabschnitte auf, an welchen die Anschlageinrichtung mit korrespondierenden Flächenabschnitten zur Anlage kommen kann, sei es an radial innenliegenden Flächenabschnitten und/oder an radial außenliegenden Flächenabschnitten. Mit anderen Worten ist die formschlüssige Kontur des Kupplungsteils eingerichtet, die Anschlageinrichtung in einer vordefinierten Radialposition in Bezug auf das erste Verbindungsbauteil zu lagern, insbesondere mittels einem radial innenliegenden Flächenabschnitt und/oder einem radial außenliegenden Flächenabschnitt. Eine vordefinierte Radialposition kann sicherstellen, dass die Anschlageinrichtung sicher zwischen dem ersten Verbindungsbauteil und dem Kupplungsteil positioniert werden kann und die formschlüssigen Konturen ineinander eingreifen, selbst wenn sie nur (werkzeuglos) eingesteckt ist. Eine vordefinierte Radialposition ermöglicht dabei auch, die formschlüssigen Konturen mit etwas Spiel auszuführen, so dass sie leichtgängiger sind, sofern dies erwünscht ist. Dank der vordefinierten Radialposition und einer zwischen dem ersten Verbindungsbauteil und dem Kupplungsteil eingegrenzten Position bzw. Lagerung kann eine leichtgängige Formschlusskontur bereitgestellt werden, was z.B. eine werkzeuglose Montage bzw. Umpositionierung erleichtert.

Dabei kann auch auf einfache Weise eine Dämpfung vorgesehen sein. Insbesondere kann an einer oder mehreren Seitenflächen der Anschlageinrichtung, insbesondere des Grundkörpers, z.B. ein Elastomer vorgesehen sein, sei es integriert oder in Form eines aufgeklebten Elements, z.B. einem im Wesentlichen ebenen Pad.

Gemäß einem Ausführungsbeispiel weist die Anschlageinrichtung in einem Schnitt in einer Horizontalebene (HE) orthogonal zur Drehachse (R), zumindest abschnittsweise in Abschnitten in Bezug auf die Richtung der Drehachse, ein T-förmiges Querschnittsprofil aufweist, insbesondere an einem unteren Abschnitt, bevorzugt auch an einer Unterseite. Durch diese Geometrie kann zum einen ein integraler Steg bereitgestellt werden, zum anderen kann die Anschlageinrichtung in Hinblick auf eine besonders stabile Anordnung am Kupplungsteil optimiert werden. Das T-Profil kann sicherstellen, dass von beiden Seiten in Umfangsrichtung jeweils einwirkende Impulse zentrisch in die Anschlageinrichtung eingeleitet werden können.

Gemäß einem Ausführungsbeispiel weist die Anschlageinrichtung zwei Einbuchtungen auf, welche einen dazwischen liegenden Steg definieren, wobei der Steg bevorzugt zentrisch in Bezug auf die Umfangsrichtung und radial innen angeordnet ist. Diese Anordnung kann eine gleichwirkende Krafteinleitung in die Anschlageinrichtung von beiden Seiten sicherstellen, wobei der Steg auf einfache Weise in einen/den Grundkörper der Anschlageinrichtung integierbar ist.

Gemäß einem Ausführungsbeispiel umfasst die drehbare Verbindung einen Anschlagring, welcher verdrehblockierbar am ersten Verbindungsbauteil lagerbar ist und mindestens einen Anschlag aufweist, welcher mit dem Integralanschlag korrespondiert, wobei der mindestens eine Anschlag bevorzugt axial überlappend mit dem Integralanschlag angeordnet ist. Ein zusätzlicher Anschlagring kann den einstellbaren Drehbereich erweitern, z.B. um 90°. Ein Anschlagring in Kombination mit mehreren Anschlageinrichtungen kann eine besonders große Varianz beim Einstellen des Aktionsradius ermöglichen.

Die als verdrehblockierbare Anordnung beschriebene Verbindung oder Lagerung des Anschlagrings zum bzw. am Verbindungsbauteil kann dabei z.B. durch zwei aneinander schlagende oder in Eingriff miteinander bringbare Vorsprünge bereitgestellt werden, also eine formschlüssige Verbindung. Der Anschlagring ist um die Drehachse verdrehbar angeordnet, insbesondere zusammen mit dem ersten Verbindungsbauteil. Der Anschlagring kann beim Eingriff zusammen mit dem ersten Verbindungsbauteil verdreht werden, was z.B. durch einen Anschlag in Form eines Bolzens oder Sicherungsstiftes sichergestellt werden kann. Eine verdrehblockierbare Anordnung kann also eine Anordnung umfassen, bei welcher zwischen dem jeweiligen Teil und dem jeweiligen Verbindungsbauteil zwar eine relative Drehbewegung möglich ist, das Ausmaß der Drehbewegung ist jedoch durch irgendeinen Anschlag ab einem bestimmten Drehwinkel beschränkt. Sobald das Verbindungsbauteil an einem Anschlag des Anschlagrings zur Anlage kommt, ist eine relative Drehbewegung zwischen dem Verbindungsbauteil und dem Anschlagring dann in der entsprechenden Drehrichtung nicht mehr möglich. Mit anderen Worten: in einer verdrehblockierten Anordnung kann der Anschlagring zumindest in einer Drehrichtung nicht mehr weiter um das erste Verbindungsbauteil gedreht werden. Mittels einer verdrehblockierbaren Anordnung kann ein vergleichsweise großer Drehwinkelbereich eingestellt werden, insbesondere mit einem Drehwinkel größer 360°. Eine verdrehblockierbare Anordnung kann dabei gemäß einer Variante auch eine verdrehsichere Anordnung umfassen, also z.B. eine Nut-Feder-Verbindung.

Bevorzugt ist der Anschlagring zwar verdrehblockierbar am ersten Verbindungsbauteil gelagert, dies jedoch bevorzugt nur in Hinblick auf eine Drehbewegung. Mit anderen Worten: die verdrehblockierbare Anordnung bringt nicht notwendigerweise eine vordefinierte Axialposition mit sich. Vielmehr ist der Anschlagring in axialer Richtung bevorzugt am zweiten Verbindungsbauteil gelagert, insbesondere mittels der Anschlageinrichtung und/oder dem Kupplungsteil. Dabei kann das erste Verbindungsbauteil in axialer Richtung bevorzugt am zweiten Verbindungsbauteil axial positioniert, oder umgekehrt, z.B. mittels eines Wellensicherungsrings.

Als Anschlagring ist dabei bevorzugt ein Teil zu verstehen, welcher irgendwie verdrehblockierbar an die Drehbewegung des ersten Verbindungsbauteils (einer Spindel) gekoppelt ist und bevorzugt formschlüssig mit dem ersten Verbindungsbauteil zusammenwirkt. Der Anschlagring ist dabei bevorzugt in axialer Richtung relativ zum ersten Verbindungsbauteil verlagerbar. In Umfangsrichtung ist eine relative Verlagerung zueinander blockiert oder ab einem gewissen Drehwinkel blockierbar. Der Anschlagring kann z.B. ringförmig ausgebildet sein und dann als Anschlagring bezeichnet werden, welcher mindestens einen Anschlag definiert. Als Anschlag ist dabei bevorzugt irgendein insbesondere auch in axialer Richtung hervorstehender Vorsprung oder Absatz zu verstehen.

Die Anschlageinrichtung ist bevorzugt eingerichtet, ein direktes Zusammenwirken zwischen dem Anschlagring und dem Kupplungsteil zu verhindern. Die Anschlageinrichtung ist bevorzugt zwischen dem Anschlagring und dem Kupplungsteil zwischengelagert und eingerichtet, ein Drehmoment zwischen dem Anschlagring und dem Kupplungsteil zu übertragen.

Die Anschlageinrichtung ist bevorzugt axial zwischen dem Anschlagring und dem Kupplungsteil angeordnet. Als eine Anordnung "axial zwischen" ist dabei bevorzugt eine Anordnung zu verstehen, bei welcher der erste und Kupplungsteil nicht direkt miteinander gekuppelt sind, sondern nur indirekt mittels der Anschlageinrichtung. Eine Anordnung "axial zwischen" bedeutet bevorzugt, dass der Anschlagring in axialer Richtung nicht in den Kupplungsteil eingreifen muss, sondern dass ein Eingriff oder Zusammenwirken des Anschlagrings mit dem Kupplungsteil (allein) mittels der Anschlageinrichtung sichergestellt werden kann. Mit anderen Worten: der Anschlagring ist bevorzugt nur mittelbar mit dem Kupplungsteil in Verbindung, insbesondere über die Anschlageinrichtung.

Bevorzugt ist der Anschlagring in axialer Richtung entlang der Drehachse verlagerbar angeordnet. Hierdurch kann die Anschlageinrichtung zusammen mit dem Anschlagring auf einfache Weise in axialer Richtung verschoben werden, um den Drehbereich bzw. Drehwinkel einzustellen. Es ist nicht erforderlich, irgendeinen in radialer Richtung eingreifenden Bolzen oder einen den Bolzen aufnehmenden Bund zu entfernen, um den Anschlagring und den Kupplungsteil relativ zueinander in axialer Richtung zu verlagern. Hierbei kann der Anschlagring über eine Zentrierung an einer Innenmantelfläche am zweiten Verbindungsbauteil geführt werden.

Bevorzugt sind der Anschlagring und der Kupplungsteil und die Anschlageinrichtung in axialer Richtung in Reihe hintereinander angeordnet. Hierdurch kann die drehbare Verbindung, insbesondere der Ausgangspunkt bzw. Startpunkt des Drehwinkelbereichs, auf einfache Weise eingestellt werden, insbesondere nach einem axialen voneinander weg Schieben des Anschlagrings und der Anschlageinrichtung.

Durch axiale Verlagerung der Teile bzw. der Anschlageinrichtung zueinander kann eine Einstellung des Drehbereichs auf einfache Weise vorgenommen werden. Die Anordnung in Reihe hintereinander ermöglicht auch eine einfache Montage. Als eine Anordnung in Reihe hintereinander ist dabei eine Anordnung zu verstehen, bei welcher der Anschlagring an der Anschlageinrichtung zur Anlage kommt, und bei welcher die Anschlageinrichtung am Kupplungsteil zur Anlage kommt.

Bevorzugt ist die Anschlageinrichtung in axialer Richtung zwischen dem Anschlagring und dem Kupplungsteil angeordnet und überlappt in axialer Richtung den Kupplungsteil im Bereich einer formschlüssigen Kontur und überlappt in axialer Richtung den Anschlagring im Bereich des Anschlags. Indem der Anschlagring und die Anschlageinrichtung in axialer Richtung überlappend angeordnet werden, kann der Anschlagmechanismus in der Form eines einfach aufgebauten Stecksystems bereitgestellt werden. Auch kann eine gute Stabilität der Anordnung sichergestellt werden, insbesondere da sich der Anschlagring und die Anschlageinrichtung gegen ein Verkippen stabilisieren können, spezielle über die Innen- und/oder Außenmantelfläche der Anschlageinrichtung. Bevorzugt ist der Anschlagring derart dimensioniert und geometrisch ausgebildet, dass der Anschlagring, insbesondere der mindestens eine Anschlag, zumindest teilweise außen um die Anschlageinrichtung und/oder zumindest teilweise innerhalb von der Anschlageinrichtung anordenbar ist. Diese Anordnung ermöglicht eine Anordnung des mindestens einen Integralanschlags an einer Außen- oder Innenmantelfläche der Anschlageinrichtung, wodurch eine Kraft in Umfangsrichtung weitergeleitet werden kann. Der Integralanschlag kann besonders robust und massiv ausgeführt werden.

Gemäß einer Variante ist der Anschlagring ringförmig ausgebildet und weist zwei oder mehr Anschläge auf, die gegenüberliegend zueinander angeordnet sind und in axialer Richtung von einer Scheibe des Anschlagrings hervorstehen, insbesondere an einer Außenmantelfläche bzw. Kreisringfläche. Der Anschlagring kann dabei einen rotationssymmetrisch ausgebildeten, insbesondere scheibenartigen Bereich aufweisen. Als Scheibe ist dabei bevorzugt ein weitgehend eben ausgebildetes Teil zu verstehen, welches sich im Wesentlichen in einer in radialer Richtung ausgerichteten Ebene erstreckt, mit einer deutlich geringeren Erstreckung in einer axialen Richtung orthogonal zu der Ebene. Eine Ausgestaltung als Scheibe hat den Vorteil, dass eine Gleitfläche auf einfache Weise an einer jeweiligen Stirnfläche der Scheibe bereitgestellt werden kann.

Gemäß einem Ausführungsbeispiel sind der Anschlagring und die Anschlageinrichtung und wahlweise auch der Kupplungsteil in axialer Richtung am zweiten Verbindungsbauteil axial anordenbar bzw. axial positionierbar bzw. gelagert. Bevorzugt sind zumindest der Anschlagring und die Anschlageinrichtung in axialer Richtung allein aufgrund der Gewichtskraft axial am zweiten Verbindungsbauteil positioniert. Diese freie Anordnung (ohne zusätzliche Befestigungsmittel) kann einen auf besonders einfache Weise einstellbaren bzw. anpassbaren Anschlagmechanismus bereitstellen.

Gemäß einem Ausführungsbeispiel ist der Anschlagring derart angeordnet, dass eine verdrehblockierbare Anordnung am Kupplungsteil (insbesondere ausschließlich) durch eine auf den Anschlagring wirkende Gewichtskraft bzw. Gravitationskraft sichergestellt ist. Hierbei muss zum Anpassen des Anschlagmechanismus lediglich eine Verlagerung des Anschlagrings entgegen einer auf den Anschlagring wirkenden Gewichtskraft erfolgen, insbesondere werkzeuglos. Es ist nicht erforderlich, irgendwelche radial eingebrachten Sicherungsstifte oder -schrauben zu entfernen.

Bevorzugt weist der mindestens eine Integralanschlag gegenüberliegende Seitenflächen auf, welche mit dem mindestens einen Anschlag des Anschlagrings korrespondieren und bevorzugt auf demselben Teilkreisdurchmesser anordenbar sind wie der mindestens eine Anschlag.

Gemäß einem Ausführungsbeispiel weist die drehbare Verbindung mindestens zwei Anschlageinrichtungen auf, wobei der Anschlagring mittels der Anschlageinrichtung in axialer Richtung am Kupplungsteil oder am zweiten Verbindungsbauteil axial positionierbar ist. Diese Anordnung erleichtert das Einstellen der drehbaren Verbindung, selbst wenn ein zusätzlicher Anschlagring vorgesehen ist. Bevorzugt ist der Anschlagring derart angeordnet oder anordenbar, dass die axiale Anordnung relativ zum Kupplungsteil durch eine auf den Anschlagring wirkende Gewichtskraft sichergestellt ist. Diese Anordnung erleichtert ein werkzeugloses Einstellen und kann eine selbstsichernde Positionierung ermöglichen.

Gemäß einem Ausführungsbeispiel bilden der Anschlagring und die Anschlageinrichtung ein Lager füreinander, insbesondere ein Gleitlager zur Gleitbewegung relativ zueinander. Bevorzugt bilden mindestens zwei Anschlageinrichtungen und der Anschlagring zusammen ein Gleitlager. Dabei liegt der Anschlagring auf der jeweiligen Anschlageinrichtung auf. Hierdurch kann der Anschlagring reibungsarm relativ zur Anschlageinrichtung bzw. zum Kupplungsteil verlagert werden, auch wenn an der Kontaktfläche zwischen dem Anschlagring und der Anschlageinrichtung eine Normalkraft auf die Kontaktfläche wirkt. Zwar muss die Normalkraft nicht groß sein, denn sie kann z.B. der Gewichtskraft des Anschlagrings entsprechen. Doch durch das Lager kann eine leichtgängige drehbare Verbindung bereitgestellt werden, und das Zusammenwirken der einzelnen Komponenten der drehbaren Verbindung kann optimiert werden. Bevorzugt ist die Anschlageinrichtung so zwischen dem Anschlagring und dem Kupplungsteil angeordnet, dass der Anschlagring nur mit der Anschlageinrichtung in Kontakt ist, nicht aber mit dem Kupplungsteil. Der Kupplungsteil ist ebenfalls nur mit der Anschlageinrichtung in Kontakt. Mit anderen Worten wirkt der Anschlagring (bevorzugt nur) mittels der Anschlageinrichtung mit dem Kupplungsteil zusammen.

Gemäß einem Ausführungsbeispiel weist der Anschlagring eine an einer Stirnseite, insbesondere an einer zur Anschlageinrichtung hin weisenden Stirnseite, angeordnete Gleitfläche auf und ist eingerichtet, mit der Gleitfläche auf der Anschlageinrichtung, insbesondere auf mindestens zwei Anschlageinrichtungen, gleitend zu drehen. Ferner kann die Anschlageinrichtung eine an einer Oberseite, insbesondere an einer zum Anschlagring hin weisenden bzw. vom zweiten Verbindungsbauteil weg weisenden Oberseite, angeordnete Gleitfläche aufweisen und eingerichtet sein, den Anschlagring mittels der Gleitfläche für eine gleitende Drehbewegung um die Drehachse zu lagern. Die Gleitfläche des Anschlagrings kann dabei bevorzugt z.B. vollständig umlaufend als Kreisringfläche ausgebildet sein, oder auch nur abschnittsweise. Durch das flächige Aufliegen auf der Anschlageinrichtung kann ein robuster Anschlagmechanismus bereitgestellt werden, welcher sich auf einfache Weise manuell betätigen lässt. Es müssen keine Schrauben oder sonstigen Sicherungsmittel oder Befestigungselemente gelöst werden, allenfalls ein optional vorgesehener Sicherungsring zum axialen Sichern des Anschlagrings. Das Ineinandergreifen der Komponenten, also des Anschlagrings, der Anschlageinrichtung und des Kupplungsteils, kann allein aufgrund der Gravitationskraft sichergestellt werden. Die flächige Lagerung auf einer ringförmigen Stirnfläche kann dabei eine exakte Positionierung der Komponenten relativ zueinander sicherstellen und die drehbare Verbindung sehr robust und leichtlaufend ausgestalten.

Als Gleitfläche ist dabei bevorzugt eine Fläche zu verstehen, welche einen geringen Reibungskoeffizienten für Gleitreibung aufweist, sei es aufgrund einer besonders niedrigen Rauhigkeit bzw. einer besonders glatten Oberfläche, sei es aufgrund eines reibungsarmen Materials mit Schmiereigenschaften. Als Material für die den Anschlagring oder die Anschlageinrichtung kann z.B. Zinkdruckguss verwendet werden, sei es mit oder ohne Beschichtung.

Die zuvor genannte Aufgabe wird auch durch ein Tragsystem für eine Stativvorrichtung zur Anordnung in einem Operationssaal und zum Positionieren einer medizintechnischen Einrichtung im Operationssaal gelöst, welches eine erfindungsgemäße drehbare Verbindung sowie das erste Verbindungsbauteil, in Form einer Spindel, und das zweite Verbindungsbauteil, in Form einer Buchse, aufweist.

Als Tragsystem sind dabei bevorzugt diejenigen Komponenten der Stativvorrichtung zu verstehen, welche zumindest teilweise auch eine Funktion zum Halten und Positionieren der medizintechnischen Einrichtung übernehmen. Das Tragsystem kann eine Vielzahl von jeweils relativ zueinander verlagerbaren bevorzugt starren Armen bzw. Trägern sowie eine Vielzahl von Hebeln, Gelenken oder Lagern umfassen.

Als medizintechnische Einrichtung ist dabei bevorzugt eine Leuchte, ein Monitor und/oder eine Versorgungskonsole zu verstehen, mittels welcher Mittel für eine Versorgung eines Patienten und/oder Instrumente für einen Operateur und/oder Licht, Reinluft oder andere im Operationssaal benötigte Medien bereitgestellt werden können. Die medizintechnische Einrichtung weist bevorzugt irgendein Bedienpanel und/oder irgendeine Anzeigevorrichtung zum grafischen Darstellen von z.B. Patientendaten auf. Das zweite Verbindungsbauteil ist als Buchse, insbesondere gabelförmige Buchse, ausgebildet, wobei zumindest die Anschlageinrichtung und der Kupplungsteil und bevorzugt auch der Anschlagring in der Buchse angeordnet sind, insbesondere zwischen zwei Ringabschnitten der Buchse, bevorzugt in einem der beiden Ringabschnitte, wobei die drehbare Verbindung bevorzugt ein Zwischenelement aufweist, welches in die Buchse, insbesondere in einen der beiden Ringabschnitte, eingelegt ist.

Hierdurch kann eine drehbare Verbindung bereitgestellt werden, deren Anschlageinrichtung gut zugänglich ist, was das Einstellen des Drehwinkels bzw. Drehwinkelbereichs erleichtert. Die einzelnen Komponenten können auf einfache Weise in die Buchse eingelegt werden, insbesondere von der Seite in radialer Richtung. Dabei kann auch ein zusätzliches Zwischenelement in die Buchse, insbesondere in einen der beiden Ringabschnitte, eingelegt werden, insbesondere um eine Entformungsschräge auszugleichen und/oder eine einfache oder kostengünstige Herstellung der formschlüssigen Konturen zu ermöglichen. Die einzelnen Komponenten können auch auf einfache Weise in axialer Richtung relativ zueinander verlagert werden, um den Drehwinkel bzw. Drehbereich einzustellen.

Durch das Zwischenelement kann auch eine in axialer Richtung besonders flache Bauform der drehbaren Verbindung sichergestellt werden, was z.B. bei Zentralachsen vorteilhaft ist, welche in axialer Richtung meist bereits eine beträchtliche Ausdehnung aufweisen.

Die zuvor genannte Aufgabe wird auch durch eine Stativvorrichtung zur Anordnung in einem Operationssaal und zum Positionieren einer medizintechnischen Einrichtung im Operationssaal gelöst, welche eine erfindungsgemäße drehbare Verbindung oder das zuvor beschriebene Tragsystem mit der erfindungsgemäßen drehbaren Verbindung umfasst.

In einer speziellen Ausgestaltungsform umfasst die Stativvorrichtung zur Anordnung in einem Operationssaal und zum Positionieren einer medizintechnischen Einrichtung im Operationssaal ein Tragsystem mit wenigstens einem Träger, insbesondere Tragarm, mit einer Buchse, die (relativ zu einem ortsfest angeordneten Teil der Stativvorrichtung oder zu einem weiteren Träger der Stativvorrichtung) verdrehbar um eine Drehachse an einer Spindel an einer drehbaren Verbindung, insbesondere einer erfindungsgemäßen drehbaren Verbindung, gelagert ist, wobei die drehbare Verbindung einen anpassbaren Anschlagmechanismus aufweist, der zwischen der Spindel und der Buchse angeordnet ist und eingerichtet ist, mindestens zwei unterschiedliche relative Drehwinkel der Buchse relativ zur Spindel oder mindestens zwei unterschiedliche Drehbereiche festzulegen, wobei der anpassbare Anschlagmechanismus aufweist: eine Verdrehsicherung, welche verdrehsicher am ersten Verbindungsbauteil anordenbar ist; einen Kupplungsteil, welcher verdrehsicher am zweiten Verbindungsbauteil anordenbar ist, und welcher eine formschlüssige Kontur zum Festlegen einzelner Drehwinkelpositionen aufweist; wobei der anpassbare Anschlagmechanismus mindestens eine Anschlageinrichtung mit einem Integralanschlag aufweist, wobei die Anschlageinrichtung eine mit der formschlüssigen Kontur des Kupplungsteils korrespondierende formschlüssige Kontur aufweist, mittels welcher die Anschlageinrichtung verdrehsicher am Kupplungsteil in mindestens zwei unterschiedlichen Drehwinkelpositionen derart positionierbar ist, dass der Integralanschlag eingerichtet ist, mit der Verdrehsicherung zusammenzuwirken und die unterschiedlichen Drehwinkel oder Drehbereiche festzulegen, und wobei die Anschlageinrichtung durch einen Grundkörper gebildet ist, wobei der Integralanschlag zumindest auch in zwei Einbuchtungen des Grundkörpers durch einen dazwischen liegenden Steg mit in Umfangsrichtung nach innen versetzten Seitenflächenabschnitten gebildet ist, wobei der Steg zumindest annähernd zentrisch in Bezug auf die Umfangsrichtung angeordnet ist.

Hierdurch kann die Stativvorrichtung, insbesondere einzelne Träger relativ zueinander, auf flexible und besonders einfache Weise positioniert werden, wobei die Anschlageinrichtung sicher positioniert werden kann, ohne Werkzeug verwenden zu müssen. Der Integralanschlag kann im Kupplungsteil versetzt werden, um eine geeignete Drehwinkelposition festzulegen, insbesondere in Bezug auf eine spezifische Anordnung der Stativvorrichtung relativ zu weiteren Komponenten im Operationssaal.

Als Träger ist dabei bevorzugt ein Ausleger oder Tragarm zu verstehen, welcher sich in einer bestimmten Richtung erstreckt und den gewünschten Aktionsradius für die unterschiedlichen Soll-Positionen der medizintechnischen Einrichtung sicherstellen kann, insbesondere durch eine Drehbewegung um eine drehbare Verbindung. Der Träger kann wahlweise auch in der Höhe verschwenkt werden und/oder in der Höhe translatorisch verlagert werden. Der Träger kann auch eine teleskopische Vorrichtung mit einem (zusätzlichen) Bewegungsfreiheitsgrad in translatorischer Richtung entlang der Längsachse des Trägers sein. Der Träger kann zumindest teilweise z.B. durch ein Stranggussprofil, insbesondere ein Aluminium-Stranggussprofil gebildet sein.

Mittels der Anschlageinrichtung ist ein Drehbereich oder ein Betrag eines Drehwinkels der drehbaren Verbindung, insbesondere ein zulässiger relativer Drehwinkel der beiden Verbindungsbauteile zueinander definierbar und jeweils auf einfache Weise einstellbar.

Bevorzugt ist der Kupplungsteil an dem bzw. an einem der Träger im Bereich der drehbaren Verbindung angeordnet. An einem der Träger kann ortsfest eine Kontur oder ein Anschlag fixiert sein, womit der Träger in Bezug auf den anderen Träger oder in Bezug auf irgendeinen anderen ortsfest angeordneten Teil in den unterschiedlichen Drehwinkelpositionen positionierbar ist.

In den nachfolgenden Zeichnungsfiguren wird die Erfindung anhand von Ausführungsbeispielen näher erläutert. Es zeigen:
- Figur 1: in schematischer Darstellung in perspektivischer Ansicht eine drehbare Verbindung gemäß einem Ausführungsbeispiel der Erfindung;
- Figur 2: in einer perspektivischen Seitenansicht die drehbare Verbindung gemäß dem in der Fig. 1 gezeigten Ausführungsbeispiel;
- Figur 3: in einer Draufsicht die drehbare Verbindung gemäß dem in der Fig. 1 gezeigten Ausführungsbeispiel;
- Figuren 4A und 4B: jeweils in einer perspektivischen Seitenansicht ein Stellelement für das in den Figuren 1 bis 3 gezeigte Ausführungsbeispiel der drehbaren Verbindung;
- Figur 5: in einer perspektivischen Seitenansicht die drehbare Verbindung gemäß dem in der Fig. 1 gezeigten Ausführungsbeispiel in einer Explosionsdarstellung in einer Situation beim Einstellen eines Drehwinkels und/oder Drehbereichs; und
- Figur 6: in schematischer Darstellung in perspektivischer Ansicht eine drehbare Verbindung gemäß einem weiteren Ausführungsbeispiel der Erfindung.

Im Zusammenhang mit der Beschreibung der folgenden Figuren wird bei einzelnen Bezugszeichen, falls sie nicht explizit im Zusammenhang mit einer bestimmten Figur erläutert werden, auf die weiteren Figuren verwiesen.

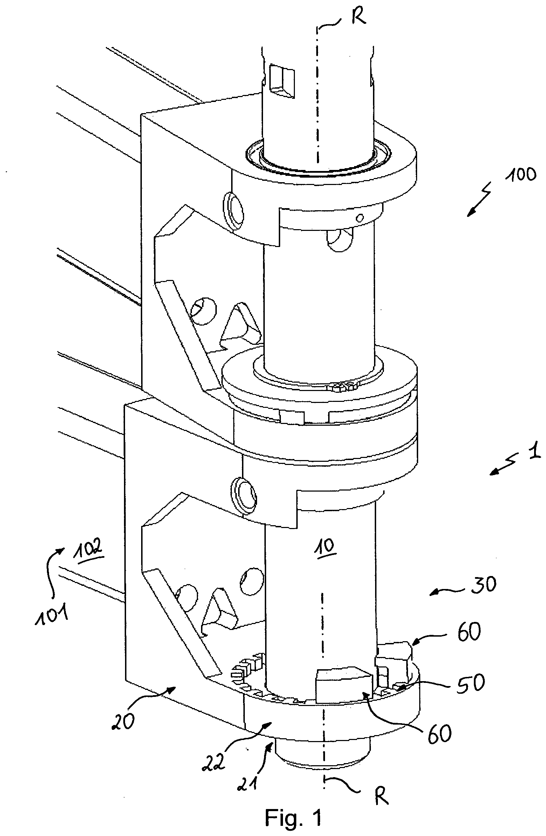

In der Figur 1 ist eine drehbare Verbindung 1 gezeigt, welche an einer Stativvorrichtung 100 um eine Drehachse R angeordnet ist. Die Stativvorrichtung 100 weist ein Tragsystem 101 mit einem ersten Träger 102 und mindestens einem weiteren Träger auf. Die drehbare Verbindung 1 weist ein erstes Verbindungsbauteil 10, in Form einer Spindel, und ein zweites Verbindungsbauteil 20, in Form einer Buchse, auf. Der erste Träger 102 ist um das erste Verbindungsbauteil 10 gelagert und mit dem zweiten Verbindungsbauteil 20 verbunden, und der weitere Träger ist um das erste Verbindungsbauteil 10 gelagert und mit einer weiteren Buchse verbunden. Die Buchse 20 kann dabei als gabelförmig beschrieben werden und weist zwei jeweils in einem Ringabschnitt 22 der Buchse 20 angeordnete Durchführungen 21 auf, durch welche das erste Verbindungsbauteil 10 hindurchgeführt ist. Zwischen den Ringabschnitten 22 ist eine Kavität gebildet, welche in radialer Richtung manuell zugänglich ist, insbesondere zum Anpassen eines Anschlagmechanismus 30. Die axiale Position der Buchse 20 an der Spindel 10 kann mittels eines an der Spindel befestigten Wellensicherungsrings bzw. durch eine Wellenmutter definiert werden.

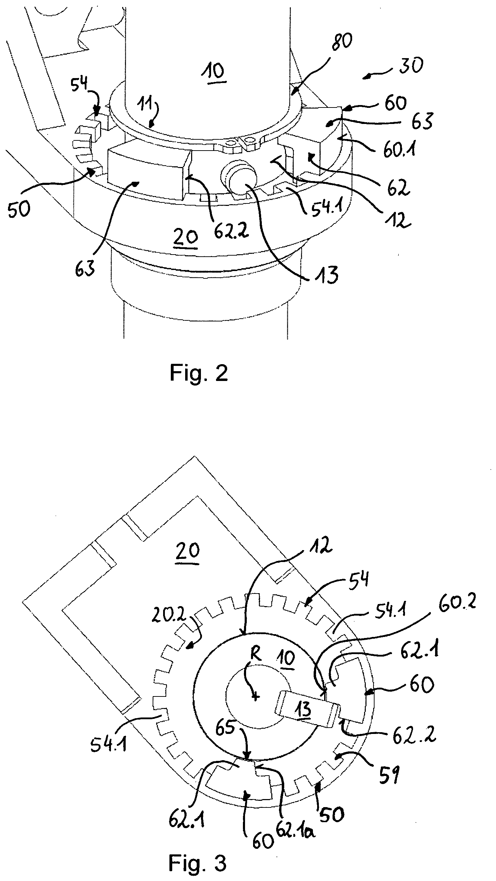

Die drehbare Verbindung 1 weist einen anpassbaren Anschlagmechanismus 30 auf, welcher zwischen der Spindel 10 und der Buchse 20 angeordnet ist. Der Anschlagmechanismus 30 weist zwei Anschlageinrichtungen 60 und einen Kupplungsteil 50 auf. Jede Anschlageinrichtung 60 ist als vergleichsweise schmales Stellelement ausgebildet. Der Kupplungsteil 50 ist als Zahnkranz ausgebildet (vgl. Fig. 3). Der Zahnkranz 50 ist innerhalb der Buchse 20 angeordnet bzw. durch den Ringabschnitt 22 der Buchse 20 gebildet, insbesondere an einem Rand bzw. einer Innenmantelfläche eines von zwei Ringabschnitten der gabelförmigen Buchse 20.

In der Figur 2 ist die Position der Anschlageinrichtungen 60 relativ zur Spindel 10 und zur Buchse 20 im Detail gezeigt. Die Spindel 10 weist eine Nut 11 zur Aufnahme eines Sicherungsrings 80 auf. Der Sicherungsring 80 kann verhindern, dass die Anschlageinrichtungen 60 in axialer Richtung ungewollt nach oben verlagert werden. Die jeweilige Anschlageinrichtung 60 weist eine Oberseite auf, an welcher der Sicherungsring 80 zur Anlage kommen kann. Der Sicherungsring 80 ist nicht notwendigerweise erforderlich. Vielmehr kann er optional nachgerüstet werden, insbesondere auch dann, wenn die Spindel 10 nicht vertikal ausgerichtet ist. Der Sicherungsring 80 kann auf einfache Weise entfernt werden, um den Anschlagmechanismus 30 einzustellen. Dazu kann die jeweilige Anschlageinrichtung 60 nach oben auf der gezeigten Position herausgezogen werden, bis die Anschlageinrichtung 60 nicht mehr in die Buchse 20 bzw. den Zahnkranz 50 eingreift. Die Anschlageinrichtung 60 kann daraufhin in einer anderen Drehwinkelposition wieder nach unten in Eingriff mit der Buchse 20 bzw. dem Zahnkranz 50 gebracht werden (eingesteckt werden). Der anpassbare Anschlagmechanismus kann dabei ganz ohne irgendwelche Sicherungsschrauben oder -ringe angepasst werden.

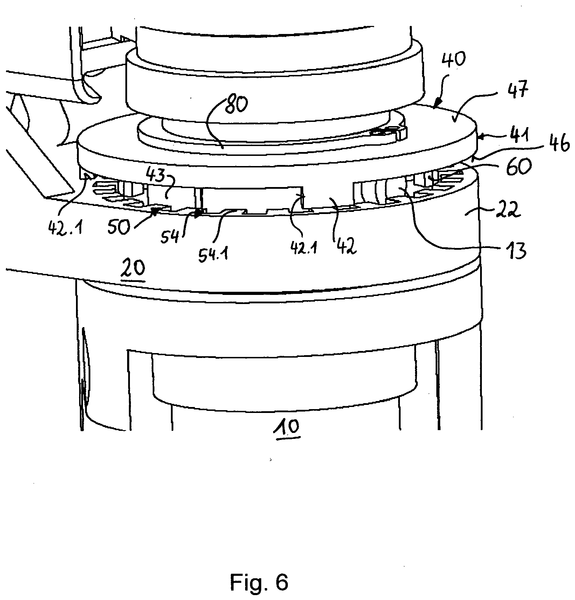

Die jeweilige Anschlageinrichtung 60 ist zwischen der Spindel 10 und einer formschlüssigen Kontur 54 des Kupplungsteils 50 angeordnet. Die formschlüssige Kontur 54 ist durch einzelne Zähne 54.1 gebildet. In der Spindel 10 ist eine Verdrehsicherung 13 in Form eines Radialbolzens radial überlappend mit der jeweiligen Anschlageinrichtung 60 angeordnet. Der Radialbolzens 13 ragt in eine zwischen der Spindel 10 und der formschlüssigen Kontur 54 gebildete Kavität. Die jeweilige Anschlageinrichtung 60 grenzt an eine Mantelfläche 12 der Spindel 10 an. Der Innendurchmesser einer daran angrenzenden Innenfläche des Stellelements 60 entspricht zumindest annähernd dem Außendurchmesser der Außenmantelfläche 12 der Spindel 10, oder ist geringfügig größer. Die jeweilige Anschlageinrichtung 60 weist eine außenliegende Fläche 60.1 auf, welche geometrisch korrespondierend zur formschlüssigen Kontur 54 ausgebildet ist. Die jeweilige Anschlageinrichtung 60 weist zwei gegenüberliegende Seitenflächen 62.2 bzw. Radialflächen bzw. Flanken auf, welche sich bevorzugt zumindest annähernd in einer Ebene erstrecken, welche parallel zur Rotationsachse R verläuft. Die ebenen Seitenflächen 62.2 bilden Anschlagsflächen, an welchen Anschläge bei einer relativen Verdrehung zur Anlage kommen können. Die ebenen Seitenflächen 62.2 korrespondieren z.B. mit Anschlägen eines Anschlagrings, wie im Zusammenhang mit der Figur 6 beschrieben.

Die jeweilige Anschlageinrichtung 60 weist einen Integralanschlag 62 auf, welcher durch einen Grundkörper 63 der Anschlageinrichtung 60 gebildet ist. Die jeweilige Anschlageinrichtung 60 ist im Wesentlichen allein durch den kreisringsegmentförmigen Grundkörper 63 gebildet, so dass die Anschlageinrichtung 60 als Stellelement oder Stellblock bezeichnet werden kann. Beim gezeigten Ausführungsbeispiel ist ein Steg (vgl. Steg 62.1 in Fig. 3) eine wirksame Komponente des Integralanschlags 62. Der Steg wirkt mit dem Radialbolzen 13 zusammen. Der jeweilige Stellblock 60 kann relativ zur Buchse 20 in unterschiedlichen Drehwinkelpositionen positioniert werden, wobei die Drehwinkelpositionen durch die Anordnung und Anzahl der Zähne 54.1 definiert werden.

In der Figur 3 ist gezeigt, auf welche Weise der Radialbolzen 13 mit den Stellelementen 60 zusammenwirken kann. Die beiden Stellelemente 60 sind so angeordnet, dass ein Verdrehwinkel von knapp 90° realisiert werden kann, wobei der Drehbereich eine Ausrichtung der Buchse 20 zwischen der gezeigten Position und einer Position ermöglicht, in welcher die Buchse 20 ganz links von der Spindel 10 angeordnet ist. In der gezeigten Position kommt der Radialbolzen 13 am Steg 62.1 zur Anlage, insbesondere an gegenüber den Seitenflächen 62.2 jeweils nach innen versetzten Seitenflächenabschnitten 62.1a. Der Steg 62.1 ist zentrisch in Bezug auf die Umfangserstreckung des jeweiligen Stellblocks 60 angeordnet. Die jeweilige Seitenfläche 62.2 bleibt bei diesem Ausführungsbeispiel funktionslos.

Die formschlüssige Kontur 54 des Zahnkranzes 50 ist an einer nach innen weisenden Mantelfläche 20.2 der Buchse 20 ausgebildet. Zwischen den einzelnen Zähnen 54.1 sind Ausnehmungen 59 gebildet, in welche die Stellblöcke 60 eingesteckt sind. Die Stellblöcke 60 sind jeweils über eine Zentrierung 65 an der Mantelfläche 12 der Spindel 10 in der zwischen der Spindel 10 und der Mantelfläche 20.2 der Buchse 20 gebildeten Kavität zentriert, wobei die Zentrierung 65 durch eine innenliegende Fläche 60.2 bereitgestellt werden kann. Ein Abschnitt der innenliegenden Fläche 60.2 kann die Zentrierung 65 bilden.

Am jeweiligen Stellelement 60 kann wahlweise auch ein Dämpfungselement (nicht dargestellt) angeordnet werden, welches zwischen dem Radialbolzen 13 und der formschlüssigen Kontur 54 des Kupplungsteils 50 wirken kann. Das Dämpfungselement kann z.B. als Elastomer ausgebildet sein, dessen Geometrie mit der Geometrie des Stellelements 60, insbesondere des Stegs 62.1, korrespondiert. Das Dämpfungselement kann z.B. separates Teil oder als in den Grundkörper integriertes Teil ausgebildet sein. Eine Dämpfungsfunktion kann jedoch auch durch eine geeignete Materialwahl (ein einziges Material) vom Stellelement 60 erfüllt werden, ohne dass unterschiedliche Materialien vorliegen müssen.

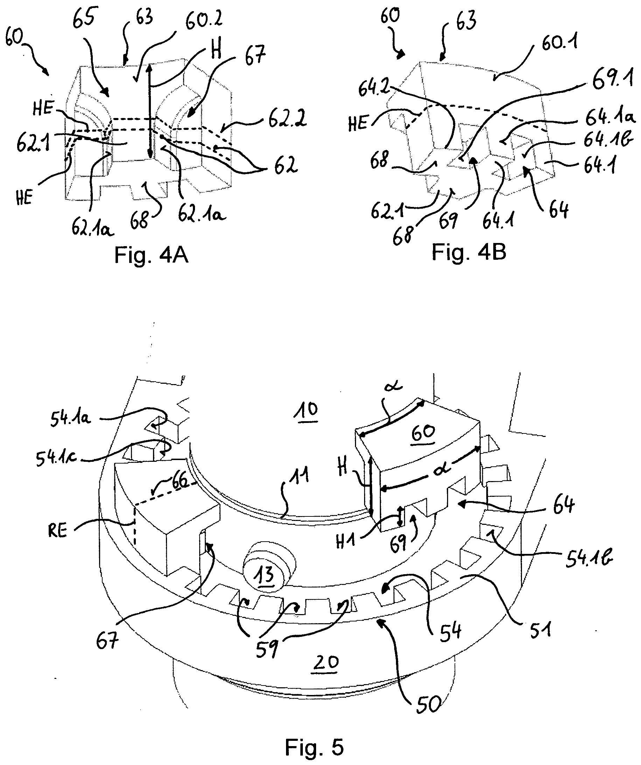

In der Figur 4A ist das Stellelement 60 im Detail mit Blick auf eine Innenseite gezeigt. Das Stellelement 60 weist eine absolute Höhe H auf. Die innenliegende Fläche 60.2 ist über diese gesamte absolute Höhe H ausgebildet und liefert die Zentrierung 65. Die innenliegende Fläche 60.2 bzw. Zentrierung 65 ist geometrisch korrespondierend zur Mantelfläche der Spindel ausgebildet (vgl. Fig. 3). Mit anderen Worten: Die innenliegende Fläche 60.2 bzw. Zentrierung 65 ist konkav gewölbt und beschreibt einen Kreisbogen. Zwei seitliche Einbuchtungen 67 definieren den integralen Steg 62.1, welcher von den versetzten Seitenflächenabschnitten 62.1a flankiert wird. Der Integralanschlag 62 ist durch die versetzten Seitenflächenabschnitte 62.1a sowie die Seitenflächen bzw. Flanken 62.2 gebildet, wobei die Flanken 62.2 insbesondere im Zusammenhang mit dem in der Figur 6 beschriebenen Ausführungsbeispiel eine Funktion erfüllen. Das Stellelement 60 weist eine ebene Unterseite 68 auf, mittels welcher es in der in Fig. 3 gezeigten Buchse 20 bzw. formschlüssigen Kontur 54 zur Anlage kommen kann. In einem Schnitt entlang einer der beiden angedeuteten Horizontalebenen HE weist das Stellelement 60 ein T-förmiges Querschnittsprofil auf.

In der Figur 4B ist das Stellelement 60 im Detail mit Blick auf eine Außenseite gezeigt. Das Stellelement 60 weist eine formschlüssige Kontur 64 auf, welche durch einzelne Zähne 64.1 gebildet ist. Zwischen der außenliegenden Fläche 60.1 und der Unterseite 68 sind zwei Ausnehmungen 69 angeordnet, welche die drei Zähne 64.1 definieren. Zwei der drei Zähne 64.1 sind außenliegend angeordnet und werden teilweise durch die Seitenflächen 62.2 (vgl. Fig. 4A) gebildet. Jeder Zahn 64.1 ist durch vier unterschiedliche Flächenabschnitte definiert, nämlich durch einen radial außenliegenden Flächenabschnitt 64.1a, durch zwei Flanken bzw. Radialflächenabschnitte 64.1b sowie durch einen Abschnitt der Unterseite 68. Die Ausnehmungen 69 definieren jeweils einen innenliegenden Flächenabschnitt 69.1, welcher mit einem Zahn der formschlüssigen Kontur des Kupplungsteils korrespondieren kann (vgl. Fig. 5). Das Stellelement 60 weist einen Rand 64.2 bzw. eine radial außenliegende Unterkante auf, welche(r) durch die Ausnehmungen 69 unterbrochen ist. Mit anderen Worten: Die Ausnehmungen 69 bzw. Zähne 64.1 sind an der radial außenliegenden Unterkante 64.2 ausgebildet.

In der Figur 5 ist einer der Stellblöcke 60 in einer Anordnung gezeigt, in welcher der Anschlagmechanismus angepasst werden kann. Der jeweilige Stellblock 60 kann durch axiales Herausziehen aus der Kavität zwischen Spindel 10 und Buchse 20 umpositioniert und axial wieder in die Kavität eingesteckt werden. Hierbei kann die formschlüssige Kontur 64 des Stellelements 60 aus der korrespondierenden formschlüssigen Kontur 54 des Zahnkranzes 50 manuell und werkzeuglos herausgelöst bzw. in axialer Richtung herausgezogen werden und auch manuell und werkzeuglos wieder eingesteckt werden. Dabei kann der Stellblock 60 an der Mantelfläche der Spindel 10 entlang geführt werden. In der Nut 11 an der Spindel 10 ist kein Sicherungsring vorgesehen.

Der Kupplungsteil 50 weist einen Rand 51 auf, an welchem die formschlüssige Kontur 54 ausgebildet ist. Der Rand 51 kann eine Radialposition für das Stellelement 60 definieren und das Stellelement 60 dabei auf sichere Weise in der ringförmigen Kavität zwischen der Spindel 10 und der Buchse 20 bzw. dem Kupplungsteil 50 positionieren. Die formschlüssige Kontur 54 ist als Verzahnung ausgebildet, die in axialer und radialer Richtung hervorsteht. Die formschlüssige Kontur 54 weist eine Vielzahl einzelner Zähne 54.1 auf, welche in einem gleichbleibenden Abstand in Umfangsrichtung angeordnet sind. Jeder Zahn 54.1 ist durch vier unterschiedliche Flächenabschnitte definiert, nämlich durch einen radial innenliegenden Flächenabschnitt 54.1c, durch zwei Flanken bzw. Radialflächenabschnitte 54.1b sowie durch einen entsprechenden Flächenabschnitt einer Oberseite des Randes 51. Jeder Zahn 54.1 erstreckt sich bis zu einem radial außenliegenden Flächenabschnitt 54.1a, an welchem das Stellelement 60 in radialer Richtung positioniert werden kann.

Der jeweilige Stellblock 60 ist als Kreisringsegment symmetrisch in Bezug auf eine mittig durch den Stellblock 60 bzw. den Grundkörper des Stellblocks 60 verlaufende Radialebene RE ausgebildet. Die formschlüssige Kontur 64 des Stellblocks 60 ist über eine Höhe H1 ausgebildet, welche etwa um den Faktor 3 bis 5 kleiner ist als die Höhe H des Stellblocks. Die Höhe H des Stellblocks ist etwa um den Faktor 3 bis 5 größer als die Höhe H1 der formschlüssigen Kontur 64. Der Stellblock 60 weist in Umfangsrichtung eine Kreisbogenerstreckung α entsprechend einem Kreisbogen im Bereich von 20° bis 25° auf. Ein solcher Umfangswinkel ist ein guter Kompromiss aus Einstellvarianz und Stabilität. Der jeweilige Stellblock 60 weist eine Oberseite 66 auf, welche als Gleitfläche ausgebildet sein kann, wie im Zusammenhang mit der Figur 6 beschrieben.

In der Figur 6 ist gezeigt, auf welche Weise ein wahlweise zusätzlich verwendbarer Anschlagring 40 verdrehblockierbar an der Spindel 10 und auf mehreren Stellelementen 60 gelagert sein kann, insbesondere um einen Drehbereich größer 360° einzustellen. Der Anschlagring 40 weist ein mit dem Bolzen 13 korrespondierendes Formschlusselement 43 auf, welches an einer Innenseite des Anschlagrings 40 angeordnet ist. Mittels der verdrehblockierbaren Anordnung kann ein Totwinkel überbrückt werden, welcher z.B. aufgrund der erforderlichen Mindest-Ausdehnung des Stellelements 60 in Umfangsrichtung entsteht. Die verdrehblockierbare Anordnung ermöglicht einen vordefinierbaren Drehbereich mit einem Drehwinkel größer 330°, oder auch größer 360°, insbesondere bis 420°. Ein verdrehblockierbarer Anschlagring 40 kann auch als ein Zwischenring bezeichnet werden, welcher einen Totwinkel überbrückt und wirkungsmäßig zwischen der Spindel 10 und den Stellelementen 60 angeordnet ist. Das Stellelement 60 und der Anschlagring 40 sind in axialer Richtung in Reihe hintereinander angeordnet und greifen in axialer Richtung ineinander.

Am Anschlagring 40 sind drei Anschläge 42 vorgesehen, die in einem Winkel von etwa 120° in Umfangsrichtung zueinander versetzt angeordnet sind. Ferner ist das Formschlusselement 43 an einer Umfangsposition zumindest annähernd mittig zwischen zwei der drei Anschläge 42 angeordnet. Diese Anordnung der Anschläge 42 und des Formschlusselements 43 relativ zueinander kann insbesondere auch eine günstige Lastverteilung sicherstellen. Ferner weist der Anschlagring 40 einen scheibenförmigen Abschnitt 41 auf. Die drei Anschläge 42 stehen in axialer Richtung vom scheibenförmigen Abschnitt 41 hervor.

Das jeweilige Stellelement 60 ist dabei in der Kavität radial zwischen der Spindel 10 und der Buchse 20 anordenbar, und die Verdrehsicherung bzw. der Bolzen 13 ragt in diese Kavität, in welcher auch das Formschlusselement 43 verlagerbar anordenbar ist.

Aus den Figuren 5 und 6 geht hervor, dass der Anschlagring 40 mit einer (ersten) Stirnfläche 46 auf einer korrespondierenden Oberseite 66 des Stellelements 60 zur Anlage kommen kann und daran bei einer relativen Drehbewegung entlang gleiten kann. Die Stirnfläche 46 weist dabei einen ringförmigen Gleitflächenabschnitt auf, welcher zwischen den Anschlägen 42 und dem Formschlusselement 43 angeordnet ist. Die Oberseite des Stellelements 60 und die Unterseite bzw. Gleitfläche 46 des Anschlagrings 40 bilden ein Gleitlager. Hierzu kann die Oberseite des Stellelements 60 z.B. auch eine Beschichtung mit einem niedrigen Reibkoeffizienten aufweisen, oder das Stellelement 60 kann zumindest teilweise aus einem entsprechenden Material ausgeführt sein. Gleiches gilt für den Anschlagring 40 bzw. die Fläche 46. Die auf die Oberseite des Stellelements 60 einwirkende Kraft ist jedoch nicht groß: der Anschlagring 40 weist nur eine verhältnismäßig kleine Masse auf. Eine Reibkraft zwischen dem Anschlagring 40 und dem Stellelement 60 kann bei dieser Anordnung nahezu vernachlässigbar sein. Die Stirnfläche 46 und die Oberseite des Stellelements 60 bzw. entsprechende Flächenabschnitte können auch als Gleitflächenabschnitte bezeichnet werden.

Bei der in der Figur 6 gezeigten Anordnung kann wahlweise eine axiale Sicherung der Komponenten mittels eines Sicherungsrings 80 erfolgen, welcher mit einer Oberseite bzw. zweiten Stirnfläche 47 des Anschlagrings 40 zusammenwirkt. Die Verwendung des Sicherungsrings 80 ist jedoch auch bei diesem Ausführungsbeispiel nicht notwendigerweise erforderlich. Vielmehr können sich die einzelnen Komponenten auch gegenseitig sichern, insbesondere allein aufgrund einer angreifenden Gewichtskraft, welche die Axialpositionierung sicherstellen kann.

### Bezugszeichenliste

- 1: drehbare Verbindung
- 10: erstes Verbindungsbauteil, Spindel
- 11: Nut
- 13: Verdrehsicherung, insbesondere Radialbolzen
- 20: zweites Verbindungsbauteil, Buchse
- 20.2: nach innen weisende Mantelfläche der Buchse
- 21: Durchführung für erstes Verbindungsbauteil
- 22: Ringabschnitt der gabelförmigen Buchse
- 30: anpassbarer Anschlagmechanismus
- 40: Anschlagring
- 41: scheibenförmiger Abschnitt
- 42: Anschlag
- 42.1: Seitenfläche, insbesondere ebene Anschlagfläche
- 43: Formschlusselement
- 46: erste Stirnfläche, insbesondere Gleitfläche
- 47: zweite Stirnfläche
- 50: Kupplungsteil, insbesondere Zahnkranz
- 51: Rand
- 54: formschlüssige Kontur
- 54.1: einzelner Zahn
- 54.1a: radial außenliegender Flächenabschnitt
- 54.1b: Flanke bzw. Radialfläche
- 54.1c: innenliegender Flächenabschnitt
- 59: Ausnehmung
- 60: Anschlageinrichtung, insbesondere Stellelement oder Stellblock
- 60.1: außenliegende Fläche
- 60.2: innenliegende Fläche
- 62: Integralanschlag
- 62.1: Steg oder innenliegender Absatz, insbesondere radial nach innen freistehender Steg
- 62.1a: versetzter Seitenflächenabschnitt, insbesondere ebene Anschlagfläche
- 62.2: Seitenfläche
- 63: Grundkörper
- 64: formschlüssige Kontur
- 64.1: einzelner Zahn
- 64.1a: radial außenliegender Flächenabschnitt
- 64.1b: Flanke bzw. Radialflächenabschnitt
- 64.2: Rand bzw. radial außenliegende Unterkante
- 65: Zentrierung
- 66: Oberseite, insbesondere Gleitfläche
- 67: Einbuchtung
- 68: Unterseite
- 69: Ausnehmung
- 69.1: innenliegender Flächenabschnitt
- 80: Sicherungsring
- 100: Stativvorrichtung
- 101: Tragsystem
- 102: (erster) Träger
- H: Höhe der Anschlageinrichtung
- HE: Horizontalebene
- H1: Höhe der formschlüssigen Kontur der Anschlageinrichtung
- R: Drehachse
- RE: Radialebene
- α: Kreisbogenerstreckung bzw. Umfangswinkel

## Patentansprüche

1. Drehbare Verbindung (1) für eine Stativvorrichtung (100) zur Anordnung in einem Operationssaal, umfassend einen anpassbaren Anschlagmechanismus (30), der zwischen einem als Spindel ausgebildetem ersten Verbindungsbauteil (10) und einem relativ zum ersten Verbindungsbauteil (10) verdrehbar um eine Drehachse (R) gelagerten und als Buchse ausgebildetem zweiten Verbindungsbauteil (20) anordenbar ist und eingerichtet ist, mindestens zwei unterschiedliche relative Drehwinkel der Verbindungsbauteile (10, 20) relativ zueinander oder mindestens zwei unterschiedliche Drehbereiche festzulegen, wobei der anpassbare Anschlagmechanismus (30) aufweist:
- eine Verdrehsicherung (13), welche verdrehsicher am ersten Verbindungsbauteil (10) anordenbar ist;
- ein Kupplungsteil (50), welches verdrehsicher am zweiten Verbindungsbauteil (20) anordenbar ist, und welches eine formschlüssige Kontur (54) zum Festlegen einzelner Drehwinkelpositionen aufweist;
**dadurch gekennzeichnet, dass** der anpassbare Anschlagmechanismus (30) mindestens eine Anschlageinrichtung (60) mit einem Integralanschlag (62) aufweist, wobei die Anschlageinrichtung (60) eine mit der formschlüssigen Kontur (54) des Kupplungsteils (50) korrespondierende formschlüssige Kontur (64) aufweist, mittels welcher die Anschlageinrichtung (60) verdrehsicher am Kupplungsteil (50) in mindestens zwei unterschiedlichen Drehwinkelpositionen derart positionierbar ist, dass der Integralanschlag (62) eingerichtet ist, mit der Verdrehsicherung (13) zusammenzuwirken und die unterschiedlichen Drehwinkel oder Drehbereiche festzulegen.

2. Drehbare Verbindung (1) nach Anspruch 1, **dadurch gekennzeichnet, dass** die Anschlageinrichtung (60) als steckbares Stellelement, insbesondere Stellblock, ausgebildet ist, bevorzugt als in axialer Richtung entlang der Drehachse (R) axial verlagerbares Stellelement.

3. Drehbare Verbindung (1) nach Anspruch 1 oder 2, **dadurch gekennzeichnet, dass** die Anschlageinrichtung (60) durch einen Grundkörper (63) gebildet ist, wobei der Integralanschlag (62) bevorzugt an einer Seitenfläche des Grundkörpers und/oder in einer Einbuchtung des Grundkörpers gebildet ist.

4. Drehbare Verbindung (1) nach einem der vorhergehenden Ansprüche, **dadurch gekennzeichnet, dass** der Integralanschlag (62) durch einen Steg (62.1) mit in Umfangsrichtung nach innen versetzten Seitenflächenabschnitten (62.1a) und/oder durch Seitenflächen (62.2) des Grundkörpers (63) gebildet ist.

5. Drehbare Verbindung (1) nach Anspruch 3 oder 4 rückbezogen auf Anspruch 3, **dadurch gekennzeichnet, dass** der Grundkörper (63) eine kreisbogenförmige Geometrie aufweist, insbesondere eine kreisbogenförmige innenliegende Fläche (60.2) und/oder eine kreisbogenförmige außenliegende Fläche (60.1).

6. Drehbare Verbindung (1) nach Anspruch 5 oder 4 rückbezogen auf Anspruch 3, **dadurch gekennzeichnet, dass** der Grundkörper (63) als Kreisringsegment ausgebildet ist, welches bevorzugt symmetrisch in Bezug auf eine mittig durch den Grundkörper (63) verlaufende Radialebene (RE) ausgebildet ist.

7. Drehbare Verbindung (1) nach einem der vorhergehenden Ansprüche, **dadurch gekennzeichnet, dass** die Anschlageinrichtung (60) in Umfangsrichtung des Kupplungsteils (50) um die Drehachse (R) eine Erstreckung entsprechend einem Kreisbogen im Bereich von 5° bis 50°, bevorzugt 10° bis 40°, weiter bevorzugt 15° bis 30° aufweist.

8. Drehbare Verbindung (1) nach einem der vorhergehenden Ansprüche, **dadurch gekennzeichnet, dass** die formschlüssige Kontur (54) des Kupplungsteils (54) an einer nach innen weisenden Mantelfläche und/oder an einer in die axiale Richtung weisenden Oberseite des Kupplungsteils ausgebildet ist, und dass die formschlüssige Kontur (64) der Anschlageinrichtung an einer in axialer Richtung zum Kupplungsteil (50) hin weisenden Unterseite ausgebildet ist.

9. Drehbare Verbindung (1) nach einem der vorhergehenden Ansprüche, **dadurch gekennzeichnet, dass** die formschlüssige Kontur (64) der Anschlageinrichtung (60) durch mindestens eine Ausnehmung (69) gebildet ist, welche eine außenliegende Fläche (60.1) mit einer Unterseite (68) der Anschlageinrichtung (60) verbindet, und welche in einem Abstand zu gegenüberliegenden Seitenflächen (62.2) der Anschlageinrichtung (60) angeordnet ist.

10. Drehbare Verbindung (1) nach einem der vorhergehenden Ansprüche, **dadurch gekennzeichnet, dass** die formschlüssige Kontur (64) der Anschlageinrichtung (60) durch Zähne (64.1), insbesondere durch einen oder zwei Zähne (64.1), gebildet ist, wobei die Zähne (64.1) bevorzugt an zwei gegenüberliegenden Seitenflächen (62.2) angeordnet sind oder die Seitenflächen (62.2) zumindest abschnittsweise definieren.

11. Drehbare Verbindung (1) nach einem der vorhergehenden Ansprüche, **dadurch gekennzeichnet, dass** die Anschlageinrichtung (60) in einem Schnitt in einer Horizontalebene (HE) orthogonal zur Drehachse (R) ein T-förmiges Querschnittsprofil aufweist, insbesondere an einem unteren Abschnitt, bevorzugt auch an einer Unterseite, und/oder dass die Anschlageinrichtung zwei Einbuchtungen (67) aufweist, welche einen dazwischen liegenden Steg (62.1) definieren, wobei der Steg (62.1) bevorzugt zentrisch in Bezug auf die Umfangsrichtung und radial innen angeordnet ist.

12. Drehbare Verbindung (1) nach einem der vorhergehenden Ansprüche, **dadurch gekennzeichnet, dass** die drehbare Verbindung (1) einen Anschlagring (40) umfasst, welcher verdrehblockierbar am ersten Verbindungsbauteil (10) lagerbar ist und mindestens einen Anschlag (42) aufweist, welcher mit dem Integralanschlag (62) korrespondiert, wobei der mindestens eine Anschlag (42) bevorzugt axial überlappend mit dem Integralanschlag (62) angeordnet ist.

13. Drehbare Verbindung (1) nach Anspruch 12, **dadurch gekennzeichnet, dass** die drehbare Verbindung (1) mindestens zwei Anschlageinrichtungen (60) aufweist, wobei der Anschlagring (40) mittels der Anschlageinrichtung (60) in axialer Richtung am Kupplungsteil (50) oder am zweiten Verbindungsbauteil (20) axial positionierbar ist, wobei der Anschlagring (40) und die Anschlageinrichtung (60) bevorzugt ein Lager füreinander bilden, insbesondere ein Gleitlager zur Gleitbewegung relativ zueinander.

14. Tragsystem für eine Stativvorrichtung (100) zur Anordnung in einem Operationssaal und zum Positionieren einer medizintechnischen Einrichtung im Operationssaal, umfassend eine drehbare Verbindung (1) nach einem der Ansprüche 1 bis 13 sowie das erste Verbindungsbauteil (10), insbesondere in Form einer Spindel, und das zweite Verbindungsbauteil (20), insbesondere in Form einer Buchse.

15. Stativvorrichtung (100) zur Anordnung in einem Operationssaal und zum Positionieren einer medizintechnischen Einrichtung im Operationssaal, umfassend eine drehbare Verbindung (1) nach einem der Ansprüche 1 bis 13 oder ein Tragsystem nach Anspruch 14.

## Claims

1. A rotatable connection (1) for a mount device (100) for placement in an operating room, the connection comprising an adaptable stopping mechanism (30) that can be disposed between a first connection component (10) configured as a spindle and a second connection component (20) configured as a sleeve that is rotatably mounted around an axis of rotation (R) and is rotatable relative to the first connection component (10), the stopping mechanism also being adapted to establish at least two different relative rotational angles of the connection components (10, 20) relative to one another or at least two different rotation ranges, wherein the adaptable stopping mechanism (30) comprises:
- a rotation lock (13) that can be disposed at the first connection component (10) non-rotatingly;
- a coupling part (50) that can be disposed non-rotatingly at the second connection component (20) and that comprises a form-locking contour (54) for establishing individual rotational angle positions;
**characterized in that** the adaptable stopping mechanism (30) comprises at least one stopping device (60) with an integral stop (62), wherein the stopping device (60) comprises a form-locking contour (64) that corresponds to the form-locking contour (54) of the coupling part (50), the form-locking contour allowing the stopping device (60) to be non-rotatingly positioned at the coupling part (50) in at least two different rotational angle positions in such a way that the integral stop (62) is adapted to cooperate with rotation lock (1,3) and to establish the different rotational angles or rotation ranges.

2. The rotatable connection (1) according to claim 1, **characterized in that** the stopping device (60) is designed as a fixing element, in particular a fixing block, preferably as a fixing element that can shift in the axial direction along the axis of rotation (R).

3. The rotatable connection (1) according to claim 1 or 2, **characterized in that** the stopping device (60) is formed by a base member (63), wherein the integral stop (62) is preferably formed at a side surface of the base member and/or in a recess of the base member.

4. The rotatable connection (1) according to one of the previous claims, **characterized in that** the integral stop (62) is formed by a bridge (62.1) with side surface sections (62.1a) that are offset inward in the peripheral direction and/or by side surfaces (62.2) of the base member (63).

5. The rotatable connection (1) according to claim 3 or 4 referring back to claim 3, **characterized in that** the base member (63) has an arc-shaped geometry, in particular an arc-shaped inner surface (60.2) and/or an arc-shaped outer surface (60.1).

6. The rotatable connection (1) according to claim 5 or 4 referring back to claim 3, **characterized in that** the base member (63) is designed as a circular ring segment which is preferably symmetrical relative to a radial plane (RE) that runs centrally through the base member (63).

7. The radial connection (1) according to one of the previous claims, **characterized in that** the stopping device (60) has an extension corresponding to an arc in the range of 5° to 50°, preferably 10° to 40°, more preferably 15° to 30° around the axis of rotation (R) in the peripheral direction of the coupling part (50).

8. The rotatable connection (1) according to one of the previous claims, **characterized in that** the form-locking contour (54) of the coupling part (50) is designed on a shell surface that faces inward and/or on a top side of the coupling part pointing in the axial direction, and that the form-locking contour (64) of the stopping device is designed on a bottom side that points in the axial direction toward the coupling part (50).

9. The rotatable connection (1) according to one of the previous claims, **characterized in that** the form-locking contour (64) off the stopping device (60) is formed by at least one notch (69) that connects an outer surface (60.1) with a bottom side (68) of the stopping device (60) and that is disposed at a distance to opposing side surfaces (62.2) of the stopping device (60).

10. The rotatable connection (1) according to one of the previous claims, **characterized in that** the form-locking contour (64) of the stopping device (60) is formed by teeth (64.1), in particular by one or two teeth (64.1), wherein the teeth (64.1) are preferably disposed at two opposing side surfaces (62.2) or define the side surfaces (62.2) at least in sections.

11. The rotatable connection (1) according to one of the previous claims, **characterized in that** the stopping device (60) has a T-shaped cross sectional profile in a section in a horizontal plane (HE) orthogonal to the axis of rotation (R), in particular at a bottom section, preferably also at a bottom side, and/or that the stopping device comprises two recesses (67) that define a bridge (62.1) therebetween, wherein the bridge (62.1) is preferred to be disposed centrally relative to the peripheral direction and radially inward.

12. The rotatable connection (1) according to one of the previous claims, **characterized in that** the rotatable connection (1) comprises a stopping ring (40) that can be mounted rotationally blockable at the first connection component (10) and that has at least one stop (42) that corresponds to the integral stop (62), wherein the at least one stop (42) is preferred to be designed to axially overlap the integral stop (62).

13. The rotatable connection (1) according to claim 12, **characterized in that** the rotatable connection (1) comprises at least two stopping devices (60), wherein the stopping ring (40) can be axially positioned in the axial direction at the coupling part (50) or at the second connection component (20) using the stopping device (60), wherein the stopping ring (40) and the stopping device (60) are preferred to form a bearing for one another, in particular a sliding bearing for sliding motion relative to one another.

14. A support system for a mount device (100) for arrangement in an operating room and for positioning a medical device in the operating room, comprising a rotatable connection (1) according to one of claims 1 to 13 as well as the first connection component (10), in particular in the form of a spindle, and the second connection component (20), in particular in the form of a sleeve.

15. A mount device (100) for arrangement in an operating room and for positioning a medical device in the operating room, comprising a rotatable connection (1) according to one of claims 1 to 13 or a support system according to claim 14.

## Revendications

1. Liaison rotative (1) pour un dispositif à pied (100) destinée à être agencée dans un bloc opératoire, comprenant un mécanisme de butée (30) pouvant être adapté, qui peut être agencé entre un premier composant de liaison (10) réalisé sous la forme d'une broche et un deuxième composant de liaison (20) monté autour d'un axe de rotation (R) de manière à pouvoir tourner par rapport au premier composant de liaison (10) et réalisé sous la forme d'une douille et qui est mis au point pour fixer au moins deux angles de rotation relatifs différents des composants de liaison (10, 20) l'un par rapport à l'autre ou au moins deux zones de rotation différentes, dans laquelle le mécanisme de butée (30) pouvant être adapté présente :
- un dispositif de sécurité anti-rotation (13), qui peut être agencé de manière bloquée en rotation au niveau du premier composant de liaison (10) ;
- une partie de couplage (50), qui peut être agencée de manière bloquée en rotation au niveau du deuxième composant de liaison (20) et qui présente un contour à complémentarité de forme (54) servant à fixer diverses positions d'angle de rotation ; **caractérisée en ce que** le mécanisme de butée (30) pouvant être adapté présente au moins un dispositif de butée (60) pourvu d'une butée intégrale (62),
dans lequel le dispositif de butée (60) présente un contour à complémentarité de forme (64) correspondant au contour à complémentarité de forme (54) de la partie de couplage (50), au moyen duquel le dispositif de butée (60) peut être positionné de manière bloquée en rotation au niveau de la partie de couplage (50) dans au moins deux positions d'angle de rotation différentes de telle manière que la butée intégrale (62) est mise au point pour coopérer avec le système de sécurité anti-rotation (13) et pour fixer les zones de rotation ou angles de rotation différents.

2. Liaison rotative (1) selon la revendication 1, **caractérisée en ce que** le dispositif de butée (60) est réalisé sous la forme d'un élément de réglage enfichable, en particulier d'un bloc de réglage, de manière préférée sous la forme d'un élément de réglage pouvant être déplacé de manière axiale dans une direction axiale le long de l'axe de rotation (R).

3. Liaison rotative (1) selon la revendication 1 ou 2, **caractérisée en ce que** le dispositif de butée (60) est formé par un corps de base (63), dans laquelle la butée intégrale (62) est formée de manière préférée au niveau d'une surface latérale du corps de base et/ou dans une encoche du corps de base.

4. Liaison rotative (1) selon l'une quelconque des revendications précédentes, **caractérisée en ce que** la butée intégrale (62) est formée par une entretoise (62.1) pourvue de sections de surface latérale (62.1a) décalées vers l'intérieur dans la direction périphérique et/ou par des surfaces latérales (62.2) du corps de base (63).

5. Liaison rotative (1) selon la revendication 3 ou 4 en lien avec la revendication 3, **caractérisée en ce que** le corps de base (63) présente une géométrie en forme d'arc de cercle, en particulier une surface (60.2) située à l'intérieur en forme d'arc de cercle et/ou une surface (60.1) située à l'extérieur en forme d'arc de cercle.

6. Liaison rotative (1) selon la revendication 5 ou 4 en lien avec la revendication 3, **caractérisée en ce que** le corps de base (63) est réalisé sous la forme d'un segment en anneau de cercle, qui est réalisé de manière préférée de manière symétrique par rapport à un plan radial (RE) s'étendant au centre à travers le corps de base (63).

7. Liaison rotative (1) selon l'une quelconque des revendications précédentes, **caractérisée en ce que** le dispositif de butée (60) présente, dans la direction périphérique de la partie de couplage (50), autour de l'axe de rotation (R), une extension correspondant à un arc de cercle situé dans la plage allant de 5° à 50°, de manière préférée de 10° à 40°, de manière davantage préférée de 15° à 30°.

8. Liaison rotative (1) selon l'une quelconque des revendications précédentes, **caractérisée en ce que** le contour à complémentarité de forme (54) de la partie de couplage (54) est réalisé au niveau d'une surface d'enveloppe pointant vers l'intérieur et/ou au niveau d'un côté supérieur, pointant dans la direction axiale, de la partie de couplage, et que le contour à complémentarité de forme (64) du dispositif de butée est réalisé au niveau d'un côté inférieur pointant dans une direction axiale vers la partie de couplage (50).

9. Liaison rotative (1) selon l'une quelconque des revendications précédentes, **caractérisée en ce que** le contour à complémentarité de forme (64) du dispositif de butée (60) est formé par au moins un évidement (69), qui relie une surface (60.1) située à l'extérieur à un côté inférieur (68) du dispositif de butée (60), et qui est agencé à une distance donnée par rapport à des surfaces latérales (62.2) se faisant face du dispositif de butée (60).

10. Liaison rotative (1) selon l'une quelconque des revendications précédentes, **caractérisée en ce que** le contour à complémentarité de forme (64) du dispositif de butée (60) est formé par des dents (64.1), en particulier par une ou deux dents (64.1), dans laquelle les dents (64.1) sont agencées de manière préférée au niveau de deux surfaces latérales (62.2) se faisant face ou définissent au moins par endroits les surfaces latérales (62.2).

11. Liaison rotative (1) selon l'une quelconque des revendications précédentes, **caractérisée en ce que** le dispositif de butée (60) présente, dans une coupe, dans un plan horizontal (HE), de manière perpendiculaire par rapport à l'axe de rotation (R), un profil de section transversale en forme de T, en particulier au niveau d'une section inférieure, de manière préférée également au niveau d'un côté inférieur, et/ou que le dispositif de butée présente deux encoches (67), qui définissent une entretoise (62.1) intercalée entre ces dernières, dans laquelle l'entretoise (62.1) est disposée de manière préférée de manière centrée par rapport à la direction périphérique et à l'intérieur radialement.

12. Liaison rotative (1) selon l'une quelconque des revendications précédentes, **caractérisée en ce que** la liaison rotative (1) comprend une bague de butée (40), qui peut être montée de manière blocable en rotation au niveau du premier composant de liaison (10) et présente au moins une butée (42), qui correspond à la butée intégrale (62), dans laquelle l'au moins une butée (42) est disposée de manière préférée de manière à chevaucher axialement la butée intégrale (62).

13. Liaison rotative (1) selon la revendication 12, **caractérisée en ce que** la liaison rotative (1) présente au moins deux dispositifs de butée (60), dans laquelle l'anneau de butée (40) peut être positionné de manière axiale, au moyen du dispositif de butée (60), dans une direction axiale, au niveau de la partie de couplage (50) ou au niveau du deuxième composant de liaison (20), dans laquelle l'anneau de butée (40) et le dispositif de butée (60) forment l'un pour l'autre de manière préférée un palier, en particulier un palier lisse servant au déplacement par glissement l'un par rapport à l'autre.

14. Système de support pour un dispositif à pied (100) destiné à être agencé dans un bloc opératoire et servant à positionner un dispositif technique médical dans le bloc opératoire, comprenant une liaison rotative (1) selon l'une quelconque des revendications 1 à 13, ainsi que le premier composant de liaison (10), en particulier se présentant sous la forme d'une broche, et le deuxième composant de liaison (20), en particulier se présentant sous la forme d'une douille.

15. Dispositif à pied (100) destiné à être agencé dans un bloc opératoire et servant à positionner un dispositif technique médical dans le bloc opératoire, comprenant une liaison rotative (1) selon l'une quelconque des revendications 1 à 13 ou un système de support selon la revendication 14.
